# EUROPEAN PATENT SPECIFICATION

(11) **EP 4 292 940 B1**
(45) Date of publication and mention of the grant of the patent: **04.11.2026**
(21) Application number: 23169821.8
(22) Date of filing: 25.04.2023
(51) Int. Cl.: B64D 27/24, H01M 8/04007, B64D 41/00

(54) **FUEL CELL POWER SYSTEM FOR A VEHICLE**
BRENNSTOFFZELLEN-STROMVERSORGUNGSSYSTEM FÜR EIN FAHRZEUG
SYSTÈME D'ALIMENTATION DE PILE À COMBUSTIBLE POUR UN VÉHICULE

(30) Priority: 16.06.2022 US 202217842233
(43) Date of publication of application: 20.12.2023
(73) Proprietor: General Electric Company, Evendale, OH 45215 (US)
(72) Inventor: MINAS, Constantinos, Schenectady, 12345 (US); WANG, Honggang, Schenectady, 12345 (US)
(74) Representative: Openshaw & Co.

(56) References cited:
- JP-A- 2000 110 994
- US-A1- 2003 075 643
- US-A1- 2020 355 117
- US-A1- 2021 151 783
- US-B2- 10 553 882
- US-B2- 10 774 741
- US-B2- 10 919 635
- US-B2- 9 897 041

## Description

### FIELD

The present subject matter relates generally to a fuel cell power system for a vehicle, such as a fuel cell power and cooling system for an aeronautical vehicle.

### BACKGROUND

A conventional commercial aircraft generally includes a fuselage, a pair of wings, and a propulsion system that provides thrust. The propulsion system typically includes one or more aircraft engines, such as turbofan jet engines. The turbofan jet engine(s) may be typically mounted to a respective one of the wings of the aircraft, such as in a suspended position beneath the wing, mounted to the wing using a pylon.

The aircraft includes a fuel delivery system that generally includes a fuel tank and one or more fuel lines that extend between the fuel tank and the aircraft engines. Traditional aircraft engines are powered by aviation turbine fuel, which is typically a combustible hydrocarbon liquid fuel, such as a Kerosene-type fuel, having a desired carbon number. The aviation turbine fuel is a relatively power-dense fuel that is relatively easy to transport and stays in a liquid phase through most ambient operating conditions for aircraft.

Additionally, the aircraft engines may operate at high temperatures to maximize engine thrust. Such high temperatures may create extreme operating conditions for aircraft engines.

It has been argued that improvements in emissions from conventional aircraft having aircraft engines powered by aviation turbine fuel may be achieved by utilizing a hydrogen fuel. Hydrogen fuel is not a relatively power-dense fuel in its gaseous form and defines a relatively low boiling point and a relatively low freezing point. Hydrogen fuel further provides cooling capabilities and tends to seep through materials when in gaseous form.

Accordingly, technological improvements facilitating use of hydrogen fuel in aircraft engines in view of these and other issues would be welcomed.

US 10,774,741 relates to an aeronautical propulsion system including a turbine engine having a fan and an electric motor drivingly coupled to at least one of the fan or the turbine engine. The aeronautical propulsion system additionally includes a fuel cell for providing electrical energy to the electric motor, the fuel cell generating water as a byproduct. The aeronautical portion system directs the water generated by the fuel cell to the turbine engine during operation to improve an efficiency of the aeronautical propulsion system. US 10,553,882 relates to a fuel cell system that includes a first fuel cell unit having a first fuel cell and a second fuel cell, a second fuel cell unit having a third fuel cell and a fourth fuel cell, a hydrogen tank coupled to all fuel cells, an oxygen supply unit and an air inlet. Oxidant inlets of the first fuel cell and the fourth fuel cell are couplable with the air inlet. Oxidant inlets of the second fuel cell and the third fuel cell are couplable with the oxidant supply unit couplable with at least one of the oxygen supply unit and the air inlet. Exhaust outlets of the first and fourth fuel cells are couplable with an inert gas outlet. Exhaust outlets of the second and third fuel cells are coupled with an exhaust switching unit couplable with the inert gas outlet and a water outlet. US 9,897,041 relates to an engine for propelling an aircraft includes an annular fuel cell arrangement having at least one fuel cell, at least one electric motor couplable to the fuel cell arrangement, at least one fan couplable to the electric motor and a cowling having an inlet and an outlet nozzle. The fuel cell arrangement is arranged inside the cowling, the at least one fan is arranged between the inlet and the fuel cell arrangement inside the cowling, the electric motor is operable under consumption of electric power delivered by the fuel cell arrangement and the at least one fan is designed to produce a thrust force by creating an accelerated airflow at the outlet nozzle. The engine is extremely efficient and comprises a distinct low noise. US 2021/151783 relates to an integrated hydrogen-electric engine including an air compressor system, a hydrogen fuel source, a fuel cell stack, a heat exchanger, an elongated shaft, and a motor assembly. The heat exchanger is disposed in fluid communication with the hydrogen fuel source and the fuel cell stack. The elongated shaft supports the air compressor system, the fuel cell stack and the heat exchanger. The motor assembly is disposed in electrical communication with the fuel cell stack. US 10,919,635 relates to an unmanned aerial vehicle, wherein a fuel cell provides a structural component of the vehicle. US 2003/075643 relates to an electrically powered aircraft having fuel cells as at least a partial source of electrical energy. In many instances the electrical energy powers an electric motor used to propel the aircraft. In some instances, the electric output from the fuel cell would be augmented by power from special high power "surge" batteries for critical takeoff and climbing, where the maximum electric power is required. In preferred embodiments, such fuel cell powered aircraft will supply oxygen to the fuel cell either from a container of oxygen carried on board the aircraft, or from a ram scoop which directs air through which the aircraft is moving to the fuel cell. US 2020/355117 relates to an aircraft power plant comprising novel air management features for high-power fuel cell applications, said features combine supercharging and turbocharging elements with air and hydrogen gas pathways, utilize novel airflow concepts and provide for much stronger integration of various fuel cell drive components.

### BRIEF DESCRIPTION OF THE DRAWINGS

A full and enabling disclosure of the present preferred embodiments, including the best mode thereof, directed to one of ordinary skill in the art, is set forth in the specification, which makes reference to the appended figures, in which:
FIG. 1 is a schematic view of an aircraft having a fuel cell power system in accordance with an exemplary embodiment of the present disclosure.
FIG. 2 is a schematic, cross-sectional view of a gas turbine engine in accordance with an exemplary embodiment of the present disclosure.
FIG. 3 is a schematic, cross-sectional view of an electric fan assembly in accordance with an exemplary embodiment of the present disclosure.
FIG. 4 is a schematic view of a fuel cell power system in accordance with an exemplary aspect of the present disclosure.
FIG. 5 is a schematic view of the exemplary turbomachine is shown along the axial direction.
FIG. 6 is a simplified schematic of the exemplary engine in which a bypass airflow passage and low-pressure compressor provide compressed air to the exemplary fuel cell power system.
FIG. 7 is a simplified schematic of the exemplary engine where a bypass airflow passage provides compressed air to the exemplary fuel cell power system.
FIG. 8 is an embodiment of a fuel cell power system with a coolant system.
FIG. 9 is an embodiment of the fuel cell power system with the coolant system and an additional startup tank containing hydrogen gas.
FIG. 10 is an additional embodiment of the fuel cell power system with a power converter and at least one electric machine.
FIG. 11 is an embodiment of the fuel cell power system with a pump motor, a power converter, and a propulsion motor.
FIG. 12 is another embodiment of the fuel cell power system with a liquid hydrogen fuel pump, a pump motor, and a power converter.
FIG. 13 is a flow diagram of a method for operating an aircraft with a fuel cell power system in accordance with yet another exemplary aspect of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the embodiments.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first," "second," and "third" may be used interchangeably to distinguish one component from another and are not intended to signify location or importance of the individual components.

As may be used herein, the terms "forward" and "aft" refer to relative positions within a gas turbine engine or vehicle and refer to the normal operational attitude of the gas turbine engine or vehicle. For example, with regard to a gas turbine engine, forward refers to a position closer to an engine inlet and aft refers to a position closer to an engine nozzle or exhaust.

The terms "upstream" and "downstream" refer to the relative direction with respect to a flow in a pathway. For example, with respect to a fluid flow, "upstream" refers to the direction from which the fluid flows, and "downstream" refers to the direction to which the fluid flows. However, the terms "upstream" and "downstream" as used herein may also refer to a flow of electricity.

The singular forms "a," "an," and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value, or the precision of the methods or machines for constructing or manufacturing the components and/or systems. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

In certain exemplary aspects, a fuel cell power system for a vehicle having a propulsor is provided. The propulsor is configured to generate thrust for the vehicle and further creates a flow of compressed air αc. The fuel cell power system generally includes a fuel delivery system for providing a flow of hydrogen fuel and a fuel cell stack (e.g., including proton exchange membrane fuel cells or polymer electrolyte membrane fuel cells) configured to be located remotely from the propulsor and in airflow communication with the propulsor for receiving the flow of compressed air αc from the propulsor. The fuel cell stack further is in fluid communication with the fuel delivery system for receiving the flow of hydrogen fuel from the fuel delivery system.

As will be appreciated, such a configuration may allow for a significant reduction in weight and complexity for the fuel cell stack by eliminating a need for a dedicated airflow compressor and instead utilizing the flow of compressed air αc generated by the propulsor.

Additionally, in certain exemplary aspects, it will be appreciated that the fuel cell power system may be configured to utilize hydrogen fuel starting a liquid state. For example, the aircraft including the fuel cell power system may be configured to store the hydrogen fuel in the liquid state. Such may allow for the hydrogen fuel to be stored in a more power dense manner. However, the fuel cell stack may be configured to utilize the hydrogen fuel in a gaseous state. Accordingly, in one exemplary aspect, the fuel cell power system further includes a heat exchanger configured to thermally connect the flow of compressed air αc from the propulsor with the flow of hydrogen fuel, which may provide a sufficient amount of heat energy to the flow of compressed air αc to convert the flow of hydrogen fuel from the liquid phase to the gaseous phase.

In such a manner, the fuel cell power system may be configured to utilize heat within the flow of compressed air αc (from the propulsor) to provide the desired phase change of the hydrogen fuel without requiring dedicated heaters.

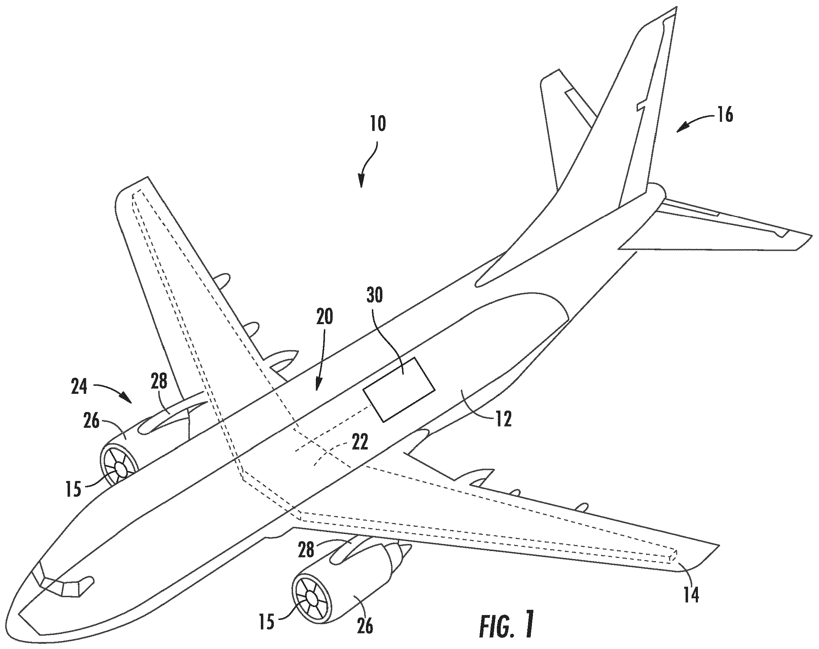

Referring now to FIG. 1, a perspective view of a vehicle of the present disclosure is provided. Specifically, for the exemplary embodiment of FIG. 1, the vehicle is configured as an aeronautical vehicle, or aircraft 10. The exemplary aircraft 10 has a fuselage 12, wings 14 attached to the fuselage 12, and an empennage 16.

The exemplary aircraft 10 further includes a fuel cell power system 20 in connection with a fuel tank 22. In the exemplary aircraft 10 shown in FIG. 1, at least a portion of the fuel tank 22 is located in a wing 14 of the aircraft 10. In some embodiments, however, the fuel tank 22 may be located at other suitable locations in the fuselage 12 or the wing 14.

The aircraft 10 further includes a propulsion system 24 that produces a propulsive thrust required to propel the aircraft 10 in flight, during taxiing operations, etc. Although the propulsion system 24 is shown attached to the wing 14 in FIG. 1, in other embodiments it may additionally or alternatively include one or more aspects coupled to other parts of the aircraft 10, such as, for example, the empennage 16, the fuselage 12, or both.

For the exemplary aspect depicted, the propulsion system 24 includes an engine, and more specifically includes a pair of engines. More specifically, still, each of the engines in the pair of engines is configured as a gas turbine engine 26 mounted to one of the respective wings 14 of the aircraft 10 in an under-wing configuration through a respective pylon 28. Each gas turbine engine 26 is capable of selectively generating a propulsive thrust for the aircraft 10, and therefore may be referred to generally as one or more propulsors 15. The amount of propulsive thrust may be controlled at least in part based on a volume of fuel provided to the gas turbine engines 26 via a fuel delivery system (not shown). In at least certain of the exemplary embodiments described herein, the fuel is a cryogenic fuel that is stored at very low temperatures, and, more specifically, is a hydrogen fuel stored substantially in a liquid phase. In such a manner, it will be appreciated that the hydrogen fuel is stored in the fuel tank 22 at a low temperature. For example, the hydrogen fuel may be stored in the fuel tank 22 at about -253 °Celsius or less at an atmospheric pressure, or at other temperatures and pressures to maintain the hydrogen fuel substantially in the liquid phase. Additionally, the fuel tank 22 may be made from known materials such as titanium, Inconel, aluminum or composite materials.

As will be appreciated, the fuel cell power system 20 further includes a fuel cell stack 30. The fuel cell stack 30 is located remotely from the propulsors 15 (e.g., the gas turbine engines 26 in FIG. 1) and, as will be appreciated from the description herein, is in airflow communication with one or more of the propulsors 15 for receiving a flow of compressed air from one or more of the propulsors. As is depicted in phantom, the fuel cell stack 30 of the fuel cell power system 20 is further in fluid communication with the fuel delivery system (and fuel tank 22) for receiving the flow of hydrogen fuel from the fuel delivery system and/or thermal communication with the fuel delivery system for transferring heat with the flow of hydrogen fuel through the fuel delivery system.

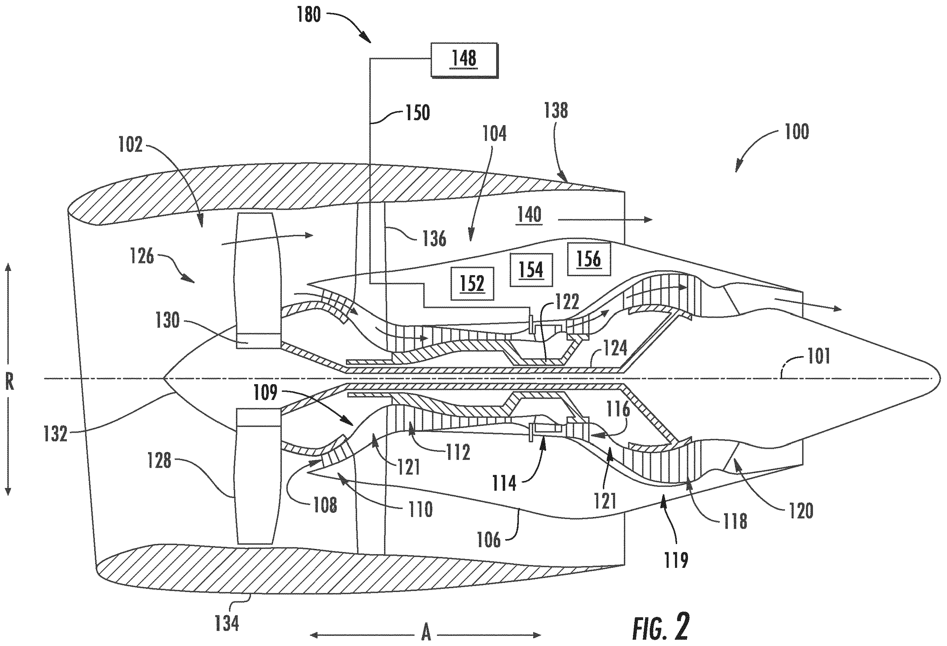

Referring now to FIG. 2, schematic, cross-sectional views of a gas turbine engine in accordance with an exemplary embodiment of the present disclosure is provided. For example, the exemplary gas turbine engine of FIG. 2 may be incorporated into propulsion system 24 described above with reference to FIG. 1 as one of the gas turbine engines 26.

For the embodiment depicted, the gas turbine engine is configured as a high bypass turbofan 100. As shown in FIG. 2, the turbofan 100 defines an axial direction A (extending parallel to a longitudinal centerline 101 provided for reference), a radial direction R, and a circumferential direction (extending about the axial direction A; not depicted in FIG. 2). In general, the turbofan 100 includes a fan section 102 and a turbomachine 104 disposed downstream from the fan section 102.

The exemplary turbomachine 104 depicted generally includes an outer casing 106 that is substantially tubular and that defines an annular inlet 108. The outer casing 106 encases, in serial flow relationship, a compressor section 109 including a booster or low-pressure (LP) compressor 110 and a high-pressure (HP) compressor 112; a combustion section 114; a turbine section 119 including a high-pressure (HP) turbine 116 and a low-pressure (LP) turbine 118; and an exhaust section 120. The compressor section 109, combustion section 114, and turbine section 119 together define at least in part a core air flowpath 121 extending from the annular inlet 108 to the exhaust section 120. The turbofan engine further includes one or more drive shafts. More specifically, the turbofan engine includes a high-pressure (HP) shaft or spool 122 drivingly connecting the high-pressure turbine 116 to the high-pressure compressor 112, and a low-pressure (LP) shaft 124 or spool drivingly connecting the low-pressure turbine 118 to the low-pressure compressor 110.

For the embodiment depicted, the fan section 102 includes a fan 126 having a plurality of fan blades 128 coupled to a disk 130 in a spaced apart manner. The fan blades 128 and disk 130 are together rotatable about the longitudinal axis 101 by the LP shaft 124. The disk 130 is covered by a rotatable front hub 132 aerodynamically contoured to promote an airflow through the plurality of fan blades 128. Further, an annular fan casing or outer nacelle 134 is provided, circumferentially surrounding the fan 126 and/or at least a portion of the turbomachine 104. The nacelle 134 is supported relative to the turbomachine 104 by a plurality of circumferentially-spaced outlet guide vanes 136. A downstream section 138 of the nacelle 134 extends over an outer portion of the turbomachine 104 so as to define a bypass airflow passage 140 therebetween.

Referring still to FIG. 2, the turbofan 100 is operable with a fuel cell power system 180 for receiving a flow of fuel from fuel cell power system180. The fuel cell power system 180 may be configured similarly to the fuel cell power system 20 of FIG. 1. Accordingly, the fuel cell power system 180 generally includes a fuel tank 148 and a fuel delivery system 150. The fuel delivery system 150 provides a fuel flow from the fuel tank 148 to the turbofan 100, and more specifically to a fuel manifold (not labeled) of the combustion section 114 of the turbomachine 104 of the turbofan 100.

Moreover, as is depicted schematically, the exemplary turbofan 100 further includes various systems to aid in the operation of the turbofan 100 and/or an aircraft including the turbofan 100. For example, the exemplary turbofan 100 may include an electric motor (not shown), which may provide electrical power to the turbofan 100 and/or various other electronic components of the turbofan 100 and/or an aircraft 10 including the turbofan 100.

Further, although not depicted, the turbofan 100 may include one or more heat exchangers within, e.g., the turbine section 119 or exhaust section 120 for extracting waste heat from an airflow therethrough, such that the waste heat may be utilized to add heat to various heat sinks as waste heat during operation. Further, additionally and/or alternatively, the one or more heat exchangers may be configured to help heat hydrogen fuel H2, as explained more in depth below.

It will be appreciated, however, that the exemplary turbofan 100 depicted in FIG. 2 is provided by way of example only. In other exemplary embodiments, any other suitable engine may be utilized with aspects of the present disclosure. For example, in other embodiments, the engine may be any other suitable gas turbine engine, such as a turboshaft engine, turboprop engine, turbojet engine, etc. In such a manner, it will further be appreciated that in other embodiments the gas turbine engine may have any other suitable configuration, such as any other suitable number or arrangement of shafts, compressors, turbines, fans, etc. Further, although the exemplary gas turbine engine depicted in FIG. 2 is shown schematically as a direct drive, fixed-pitch turbofan 100, in other embodiments, a gas turbine engine of the present disclosure may be a geared gas turbine engine (i.e., including a gearbox between the fan 126 and shaft driving the fan, such as the LP shaft 124), may be a variable pitch gas turbine engine (i.e., including a fan 126 having a plurality of fan blades 128 rotatable about their respective pitch axes), etc. Further, still, in alternative embodiments, aspects of the present disclosure may be incorporated into, or otherwise utilized with, any other type of engine, such as reciprocating engines. Additionally, in still other exemplary embodiments, the exemplary turbofan 100 may include or be operably connected to any other suitable accessory systems.

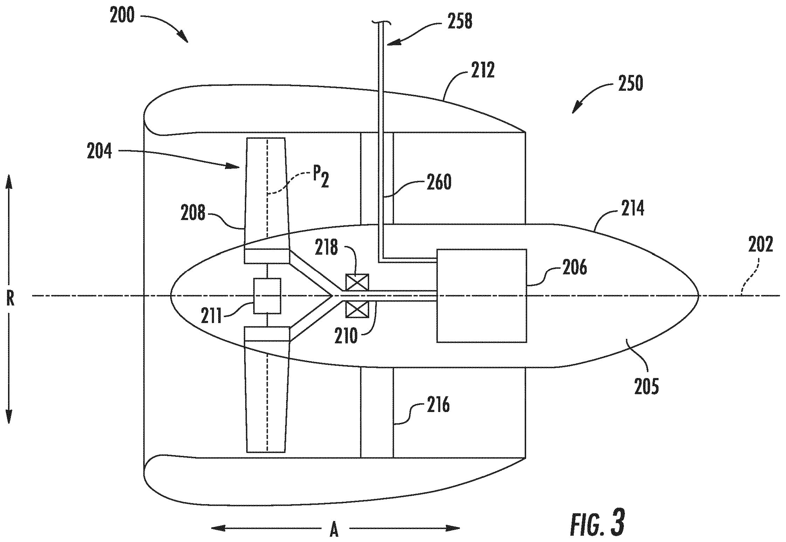

Referring now to FIG. 3, a hybrid-electric propulsion system 250 having an electric propulsor assembly 200 in accordance with an exemplary aspect of the present disclosure is provided. The electric propulsor assembly 200 may be incorporated into an aircraft, such as the exemplary aircraft 10 of FIG. 1, e.g., in addition to or instead of one or both of the gas turbine engines 26.

The electric propulsor assembly 200 includes an electric motor 206, a propulsor 205, and a fan 204. The electric propulsor assembly 200 defines an axial direction A extending along a centerline axis 202 that extends therethrough for reference, as well as a radial direction R. For the embodiment depicted, the fan 204 is rotatable about the centerline axis 202 by the electric motor 206.

The fan 204 includes a plurality of fan blades 208 and a fan shaft 210. The plurality of fan blades 208 are attached to/rotatable with the fan shaft 210 and spaced generally along a circumferential direction of the electric propulsor assembly 200 (not shown). In certain exemplary embodiments, the plurality of fan blades 208 may be attached in a fixed manner to the fan shaft 210, or alternatively, the plurality of fan blades 208 may be rotatable relative to the fan shaft 210, such as in the embodiment depicted. For example, the plurality of fan blades 208 each define a respective pitch axis P2, and for the embodiment depicted are attached to the fan shaft 210 such that a pitch of each of the plurality of fan blades 208 may be changed, e.g., in unison, by a pitch change mechanism 211. Changing the pitch of the plurality of fan blades 208 may increase an efficiency of the electric propulsor assembly 200 and/or may allow the electric propulsor assembly 200 to achieve a desired thrust profile. With such an exemplary embodiment, the fan 204 may be referred to as a variable pitch fan.

Moreover, for the embodiment depicted, the electric propulsor assembly 200 depicted additionally includes a fan casing or outer nacelle 212, attached to a core 214 of the electric propulsor assembly 200 through one or more struts or outlet guide vanes 216. For the embodiment depicted, the outer nacelle 212 substantially completely surrounds the fan 204, and particularly the plurality of fan blades 208. Accordingly, for the embodiment depicted, the electric propulsor assembly 200 may be referred to as a ducted electric fan.

Referring still particularly to FIG. 3, the fan shaft 210 is mechanically coupled to the electric motor 206 within the core 214, such that the electric motor 206 drives the fan 204 through the fan shaft 210. The fan shaft 210 is supported by one or more bearings 218, such as one or more roller bearings, ball bearings, or any other suitable bearings. Additionally, the electric motor 206 may be an inrunner electric motor (i.e., including a rotor positioned radially inward of a stator), or alternatively may be an outrunner electric motor (i.e., including a stator positioned radially inward of a rotor), or alternatively, still, may be an axial flux electric motor (i.e., with the rotor neither outside the stator nor inside the stator, but rather offset from it along the axis of the electric motor).

The electric propulsor assembly 200 may additionally be connected to an electric energy storage unit (not shown) and/or an electric machine (also not shown). In exemplary embodiments, e.g., as shown in FIG. 3, the electric propulsor assembly 200 is electrically connectable through one or more electric lines 260 of a power bus 258. For example, the power bus 258 may include various switches or other power electronics movable to selectively electrically connect the various components of the hybrid-electric propulsion system 250.

It should be appreciated, however, that in other exemplary embodiments the electric propulsor assembly 200 may have any other suitable configuration, and further, may be integrated into an aircraft, e.g., aircraft 10 of FIG. 1 in any other suitable manner. For example, in other exemplary embodiments, the electric propulsor assembly 200 may instead be configured as a plurality of electric propulsor assemblies and/or may further include a plurality of combustion engines (such as turbomachines 104) and/or an electric motor/generator. Further, in other exemplary embodiments, the electric propulsor assembly(ies) 200 and/or combustion engine(s) and electric motor/generator(s) may be mounted to the aircraft 10 at any other suitable location in any other suitable manner (including, e.g., tail mounted configurations). Further, still, in other exemplary embodiments, the hybrid-electric propulsion system 250 may not include an electric propulsor assembly 200 at all.

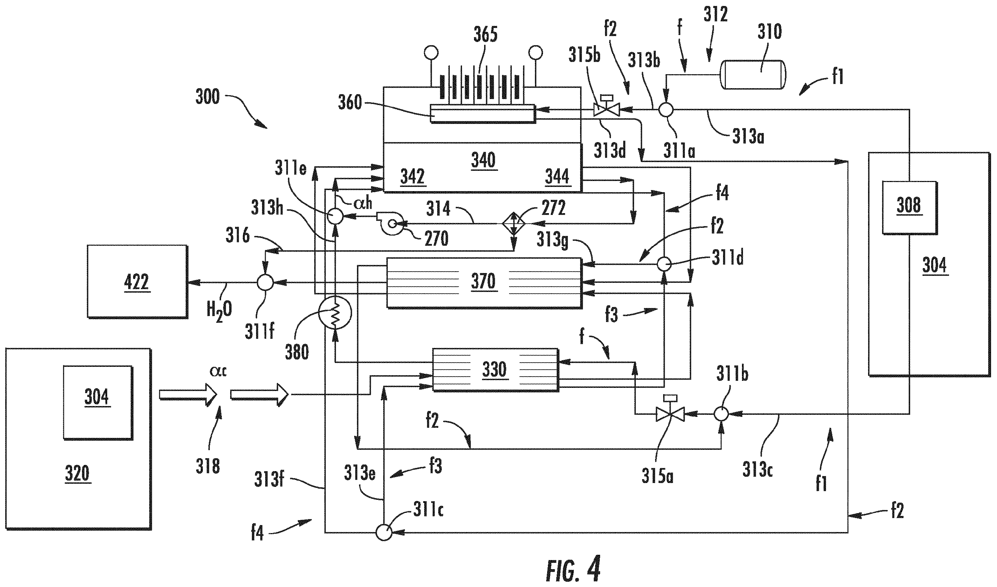

Referring now to FIG. 4, a schematic view of a fuel cell power system 300 for a vehicle having a propulsor 320 in accordance with an exemplary embodiment of the present disclosure is provided. More specifically, for the exemplary embodiment of FIG. 4, the vehicle may be an aeronautical vehicle, such as the exemplary aircraft 10 of FIG. 1, and the propulsor 320 may be an aeronautical gas turbine engine, such as the exemplary gas turbine engines 26 of FIG. 1 and/or the exemplary turbofan 100 of FIG. 2. It will be appreciated, however, that in other embodiments, the vehicle may be any other suitable land or aeronautical vehicle and the engine may be any other suitable engine or propulsor mounted to or within the vehicle in any suitable manner. Further, the fuel cell power system 300 may be configured similarly to the fuel cell power system 180 of FIG. 2 and/or the fuel cell power system 20 of FIG. 1.

As illustrated in FIG. 4, the fuel cell power system 300 includes the propulsor 320 including an engine 304 for generating a thrust for the vehicle with the propulsor 320 generating a flow of compressed air αc during operation. Further, the fuel cell power system 300 also includes a fuel delivery system 312 for providing a flow of hydrogen fuel from a fuel tank 310 to a fuel cell stack 340 located remotely from the propulsor 320. For example, in some embodiments, the propulsor 320 is part of a turbomachine, such as the turbomachine 104 of FIG. 2, the turbomachine 104 having the outer casing 106 surrounding the turbomachine 104 (see FIG. 2), and where the fuel cell stack 340 is located outside of a casing of the engine or propulsor (see, e.g., casing 106 in FIG. 2). However, it will be appreciated that the fuel cell stack 340 may be located anywhere that is separate from the propulsor 320.

Additionally, the fuel cell power system 300 is arranged in airflow communication with the propulsor 320 for receiving the flow of compressed air αc and is also in fluid communication with the fuel delivery system 312 for receiving the flow of hydrogen fuel. The airflow communication between the fuel cell power system 300 and the propulsor 320 may include one or more airflow ducts 313 (see 313a-313h). The one or more airflow ducts 313 may meet at one or more junctures 311 (see 311a-311f) and may also have one or more valves 315 (see 315a-315b) to control the airflow. The fluid communication with the fuel delivery system 312 may include one or more inlet/outlet lines.

Generally, the fuel delivery system 312 is configured to provide a flow of hydrogen fuel to the fuel cell stack 340 and a compressed airflow delivery system 318 of the fuel cell power system 300 is configured to provide a flow of compressed air αc from the propulsor 320 to the fuel cell stack 340. The fuel cell stack 340 is located remotely from the propulsor 320 as described above and is in airflow communication with the propulsor 320 through the compressed airflow delivery system 318 for receiving the flow of compressed air αc from the propulsor 320. The fuel cell stack 340 is further in fluid communication with the fuel tank 310 through the fuel delivery system 312 for receiving the flow of hydrogen fuel from the fuel delivery system 312. The fuel tank 310 may be configured to hold the hydrogen fuel at least partially within the liquid phase and may further be configured to provide hydrogen fuel to the fuel cell power system 300 substantially completely in the liquid phase, such as completely in the liquid phase. For example, the fuel tank 310 may define a fixed volume, such that as the fuel tank 310 provides hydrogen fuel to the fuel cell power system 300 substantially completely in the liquid phase, a volume of the liquid hydrogen fuel in the fuel tank 310 decreases, and the volume is made up by, e.g., gaseous hydrogen.

It will be appreciated that as used herein, the term "substantially completely" is used to describe a phase of the hydrogen fuel refers to at least 99% by mass of the described portion of the hydrogen fuel being in the stated phase, such as at least 97.5%, such as at least 95%, such as at least 92.5%, such as at least 90%, such as at least 85%, such as at least 75% by mass of the described portion of the hydrogen fuel being in the stated phase.

Additionally, the fuel cell stack 340 may be a proton exchange membrane cell stack. As used herein, the term "proton exchange membrane cell stack" refers to a grouping of multiple fuel cells that are connected in series to achieve a useful voltage, and where each fuel cell has multiple layers. In one exemplary embodiment, the outermost layers are flow plates; followed by two sealing layers that are an anode or a cathode and through which hydrogen and oxygen particles flow through; with two gas diffusion layers on either side of a proton conducting electrolyte (e.g., a proton exchange membrane) in the middle of the fuel cell. Generally, the proton exchange membrane fuel stack operates at an optimal temperature of 40-90°C; however, it will be appreciated that the fuel cell stack 340 and/or the proton exchange membrane fuel stack itself may be altered to operate at additional temperatures.

The fuel tank 310 and fuel cell power system 300 may include a variety of supporting structure to facilitate storing and/or transporting the hydrogen fuel in such a manner. For example, the fuel delivery system 312 is provided for transporting the hydrogen fuel from the fuel tank 310 to one or more other components of the fuel cell power system 300. Although not depicted in FIG. 4, the fuel delivery system 312 may extend from the fuel tank 310 to the engine 304 for providing the hydrogen fuel from the fuel tank 310 to the engine 304. Moreover, as will be explained in more detail below, the exemplary fuel cell power system 300 includes a battery heat exchanger 360 in thermal communication with the fuel cell stack 340 and in thermal communication with the fuel delivery system 312 for transferring heat with the flow of hydrogen fuel through the fuel delivery system 312.

Additionally, the fuel cell power system 300 includes a heat exchanger 330 in communication with the fuel delivery system 312 and the compressed airflow delivery system 318 for transferring heat from the flow of compressed air αc to the flow of hydrogen fuel. In such a manner, the flow of compressed air αc may heat the hydrogen fuel from the liquid phase to a gaseous phase, to a supercritical phase, or both. In some embodiments, the heat exchanger 330 may be a first heat exchanger, and the fuel cell power system 300 may further include a second heat exchanger configured to output the hydrogen coolant into first heat exchanger. It will be appreciated that the fuel cell power system 300 may be modified to include a third heat exchanger, a fourth heat exchanger, and/or a fifth heat exchanger.

In the embodiment depicted, the fuel cell power system 300 also includes a humidifier 370 for humidifying the compressed air αc into humidified compressed air αh and circulating the humidified compressed air αh to the fuel cell stack 340.

Also as shown, the fuel cell power system 300 further includes a first valve 315a in fluid communication with the fuel delivery system 312 at a location upstream of the heat exchanger 330 for metering a flow of the hydrogen fuel through the fuel delivery system 312 to the heat exchanger 330 and subsequently to the fuel cell stack 340. The first valve 315a controls the amount of hydrogen entering the heat exchanger 330 from the engine 304 and/or from the fuel tank 310. Similarly, a second valve 315b is positioned at a location upstream of the battery heat exchanger 360 for controlling the flow of the hydrogen fuel into the battery heat exchanger 360.

Turning now to a fuel power process of the fuel cell power system 300 specifically, the fuel delivery system 312 includes one or more airflow ducts 313 to facilitate the flow as described herein. In at least certain exemplary embodiments, such as the embodiment of FIG. 4, the flow of hydrogen fuel (e.g., primarily in its liquid state) is used as a coolant for various components of the fuel cell power system 300 (and gas turbine engine) prior to being utilized by the fuel cell stack 340 to generate electrical power. For example, as will be described, the flow of hydrogen fuel may be used as a coolant for the battery heat exchanger 360, the fuel cell stack 340, the humidifier 370, and the heat exchanger 330 prior to the hydrogen fuel being used for generating electrical power by the fuel cell stack 340.

In particular for the embodiment depicted, a flow f of hydrogen fuel from the fuel tank 310 is split at a first juncture 311a into a first flow f1 through a first duct 313a and a second flow f2 through a second duct 313b, as shown in FIG. 4. The first flow f1 through the first duct 313a flows from the fuel tank 310 to one or more engine heat exchangers 308, such as a first oil heat exchanger and a second exhaust gas heat exchanger, within the engine 304 (note that the engine 304 is depicted schematically in two places for clarity purposes in FIG. 4, as well as in the other figures). This hydrogen fuel returns from the one or more engine heat exchangers 308 through a third duct 313c and is rejoined with the second flow f2 at a second juncture 311b with the third duct 313c.

The second flow f2 is provided through a second valve 315b to the battery heat exchanger 360. It will be appreciated that the exemplary fuel cell power system 300 generally includes a power output assembly 365 configured to receive electrical power from the fuel cell stack 340. In certain embodiments, the power output assembly 365 may include a battery (not shown) or other similar structure for storing at least a portion of the electrical power generated prior to transferring some or all of such electrical power for useful work. The battery heat exchanger 360 is in thermal communication with the power output assembly 365 and may reduce a temperature of the power output assembly 365. Reduced temperatures for the power output assembly 365 may help it operate in a desired and/or more efficient manner, and further may assist with heating the flow of hydrogen fuel from the liquid state to the gaseous state.

The second flow f2 of hydrogen fuel from the battery heat exchanger 360 is provided through a fourth duct 313d, where the second flow f2 splits into another two flows, e.g., a primary flow f3 and a secondary flow f4, at a third juncture 311c. The primary flow f3 is provided to the heat exchanger 330 and flows through a fifth duct 313e. The secondary flow f4 is provided through a sixth duct 313f to the fuel cell stack 340 to cool the fuel cell stack 340, through a stack inlet 342 and out a stack outlet 244, before rejoining the primary flow f3 at a fourth juncture 311d.

Referring still to FIG. 4, the rejoined primary flow f3 and secondary flow f4 (collectively the second flow f2 from the fuel tank 310) are then provided through the humidifier 370 to cool the humidifier 370 and through a seventh duct 313g and rejoined with the first flow f1 from the fuel tank 310 at the second juncture 311b into a rejoined flow f. The rejoined flow f is provided through the first valve 315a to the heat exchanger 330 where the fuel is heated, e.g., by compressed air αc through the heat exchanger 330, described further below, and subsequently provided to the fuel cell stack 340 as hydrogen fuel for the fuel cell stack 340.

In additional embodiments, such as the exemplary embodiment of FIG. 4, the fuel cell power system 300 further includes a startup heater 380. As depicted, the startup heater 380 is positioned downstream of the heat exchanger 330 and upstream of the fuel cell stack 340 for heating the flow f of hydrogen fuel provided to the fuel cell stack 340 through an eighth duct 313h. In particular, when the engine 304 and/or aircraft 10 is not yet being operated, e.g., when the engine 304 and/or aircraft 10 is in startup and/or pre-operation mode, the startup heater 380 may be used to warm the hydrogen fuel before the hydrogen fuel is provided to the fuel cell stack 340. Even in embodiments where the vehicle is not in startup and/or pre-operation mode, the startup heater 380 may be used to heat the hydrogen fuel to a desired temperature before the hydrogen fuel is provided to the fuel cell stack 340.

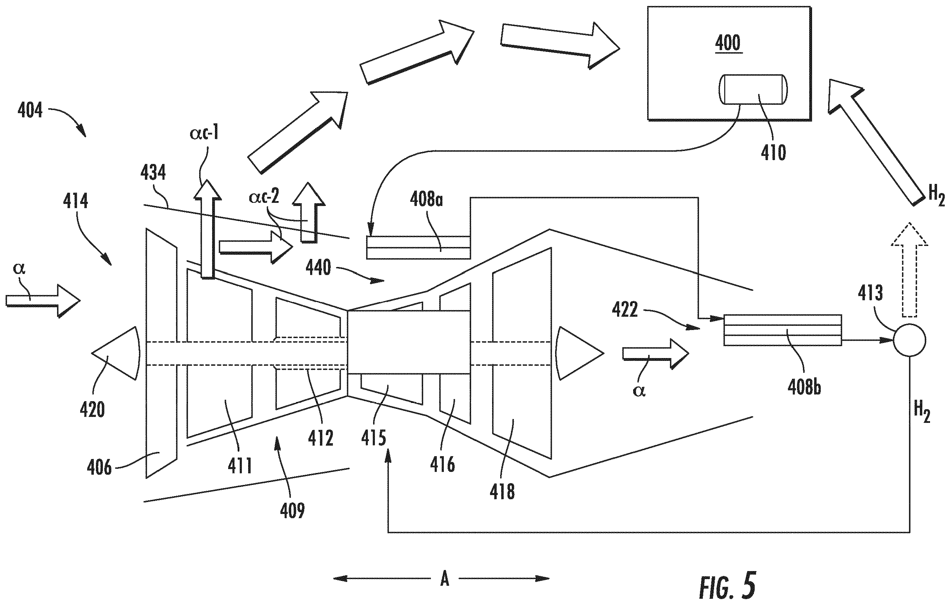

Additionally, the fuel cell power system 300 includes a recirculation system 314 directly downstream of the fuel cell stack 340, where the recirculation system 314 includes a separator 272 and a recirculation pump 270. The recirculation system 314 may further include an exhaust water system 316. The separator 272 separates exhaust water (denoted as H₂O) from the hydrogen fuel and ejects it through an exhaust section 422 as part of the exhaust water system 316 (see also exhaust section 422 of FIG. 5). Further, in some embodiments, the separator 272 may be a centrifugal separator. The recirculation pump 270 circulates the hydrogen fuel back into the fuel cell stack 340, combining with the rejoined flow f at a fifth juncture 311e, as shown in FIG. 4.

In particular, the hydrogen fuel, as it travels through the fuel cell power system 300, cools the heat exchanger 330, along with any other heat exchangers, e.g., the engine heat exchangers 308 in the engine 304, in one or more fuel cooled oil coolers of the aircraft 10, and/or at multiple locations within each fuel cell of the fuel cell stack 340. The hydrogen fuel may additionally be used to cool at least part of the battery heat exchanger 360, the humidifier 370, and/or any component of a vehicle (such as aircraft 10 of FIG. 1), e.g., by being used to cool air from the bypass airflow passage 140 and/or the air from the low-pressure compressor 110 (as shown in FIG. 5, discussed below).

Using the hydrogen fuel from the fuel tank 310 to cool the fuel cell power system 300 and/or the aircraft 10 increases efficiency in the fuel cell power system 300 and the aircraft 10 itself. Additionally, the fuel cell power system 300 may remove the need for an air compressor and/or a coolant pump. Finding a dual purpose for the hydrogen fuel (e.g., to fuel and to cool the vehicle) also eliminates or reduces the need for an outside coolant. The hydrogen fuel may further lower noise and vibrations of the fuel cell power system 300.

As will be appreciated, hydrogen fuel defines a relatively low boiling point, such that if the hydrogen fuel were provided through the fuel delivery system 312 and/or the cooling system in the liquid phase, hydrogen fuel may freeze a gas within the fuel delivery system 312. Accordingly, the heat exchanger 330 is provided to receive a flow of the hydrogen fuel in the liquid phase and heat the hydrogen fuel from the liquid phase to a gaseous phase or to a supercritical phase, such that the heated hydrogen fuel does not freeze the gas within the fuel power process.

Referring still to FIG. 4, the propulsor 320 may include the engine 304 having a compressor section (see, e.g., compressor section 109 of the turbofan 100 of FIG. 2) in fluid communication with the fuel cell stack 340. As described above with respect to FIG. 2, the turbomachine 104 may generally include the compressor section 109, the combustion section 114, and the turbine section 119 arranged in serial flow order. Additionally, in some embodiments, the propulsor 320 is a turbo propulsor (e.g., including a turbomachine, such as the exemplary turbomachine 104 of FIG. 2). In other embodiments, the propulsor 320 may be an electric propulsor, e.g., the electric propulsor as arranged according to the electric propulsor assembly 200 depicted in FIG. 3.

Generally, the compressed airflow process is provided through the compressed airflow delivery system 318. The compressed airflow delivery system 318 enters into the fuel cell power system 300 from the engine 304 of the propulsor 320. In some embodiments, e.g., where the propulsor 320 includes a turbomachine (e.g., the turbomachine 104 of FIG. 2), the low-pressure compressor 110, the bypass airflow passage 140, or both, may be a source of the compressed air αc. The compressed airflow delivery system 318 flows the compressed air αc into the heat exchanger 330, the humidifier 370, and the fuel cell stack 340, before recirculating it through the humidifier 370, where a water content of the airflow may be recaptured.

Humidifiers provide heat and humidity to the incoming oxidant or hydrogen fuel stream of fuel cells and may improve an overall system performance and reliability. Without humidification, the fuel cell membrane of the fuel cell stack 340 may dry out, which may reduce a proton transport in the fuel cell stack 340 and may decrease an oxygen reduction reaction at a cathode of a fuel cell within the fuel cell stack 340.

Referring now to FIG. 5, a propulsor 420 with a fuel cell power system 400 in accordance with another exemplary embodiment of the present disclosure is provided. For the embodiment shown, the propulsor 420 is a turbofan engine 404 similar to the exemplary turbofan 100 of FIG. 2, and the fuel cell power system 400 is configured in a similar manner as the exemplary fuel cell power system 300 of FIG. 4. As such, it will be appreciated the exemplary turbofan engine 404 generally includes a turbomachine 414 defining an axial direction A. As shown schematically in FIG. 5, the turbofan engine 404 may include, in serial airflow order, a fan 406, a compressor section 409 (including a low-pressure compressor 411 and a high-pressure compressor 412), a combustor 415, a high-pressure turbine 416, and a low-pressure turbine 418.

The schematic drawing shows that air α enters into the compressor section 409 and flows out of an exhaust section 422, which may be similar to the exemplary exhaust section 120 of FIG. 2. In exemplary embodiments, a first flow of compressed air αc-1 from the low-pressure compressor 411 is provided to the fuel cell power system 400. Additionally, a bypass airflow passage 440 is defined with a nacelle 434, the nacelle 434 extending over an outer portion of the turbomachine 414 so as to define the bypass airflow passage 440 therebetween. The bypass airflow passage 440 provides a second flow of compressed air αc-2 that makes up at least a portion of the compressed air αc that is provided to the fuel cell power system 400. In some embodiments, as described below, the second flow of compressed air αc-2 from the bypass airflow passage 440 makes up all of the compressed air αc provided to the fuel cell power system 400.

Referring still to FIG. 5, the turbomachine 414 may have one or more engine heat exchangers, such as a first engine heat exchanger 408a and a second engine heat exchanger 408b. In exemplary embodiments, the first engine heat exchanger 408a may be an oil heat exchanger and the second engine heat exchanger 408b may be a waste heat recovery heat exchanger. Hydrogen fuel may flow from a fuel tank 410 to the first engine heat exchanger 408a and the second engine heat exchanger 408b. From the second engine heat exchanger 408b, the hydrogen fuel flows through a juncture 413, from where at least a portion of the hydrogen fuel is be sent back to the fuel cell power system 400 and a second portion of the hydrogen fuel is directed to the combustor 415. In such a manner, the heat generated by the propulsor 420, which for the embodiment depicted is the turbomachine 414, may be used to heat the hydrogen fuel used for power generation by a fuel cell stack of the fuel cell power system 400 (see, e.g., FIG. 4).

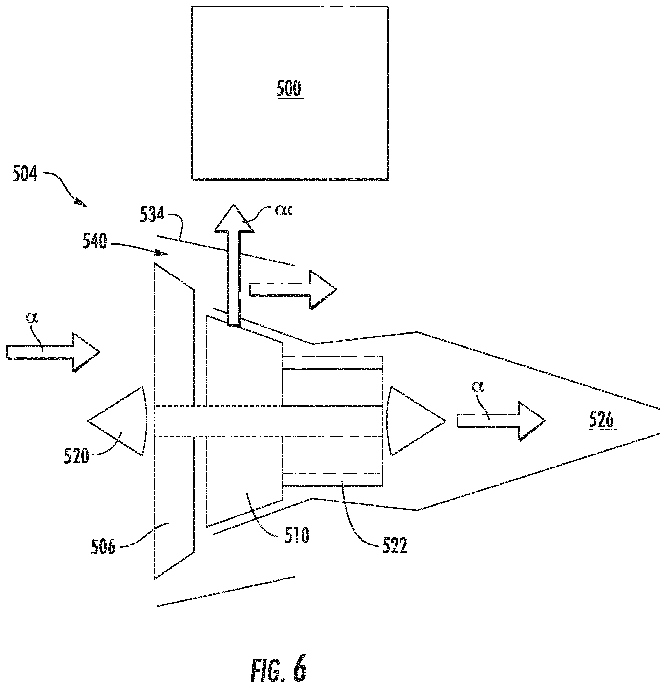

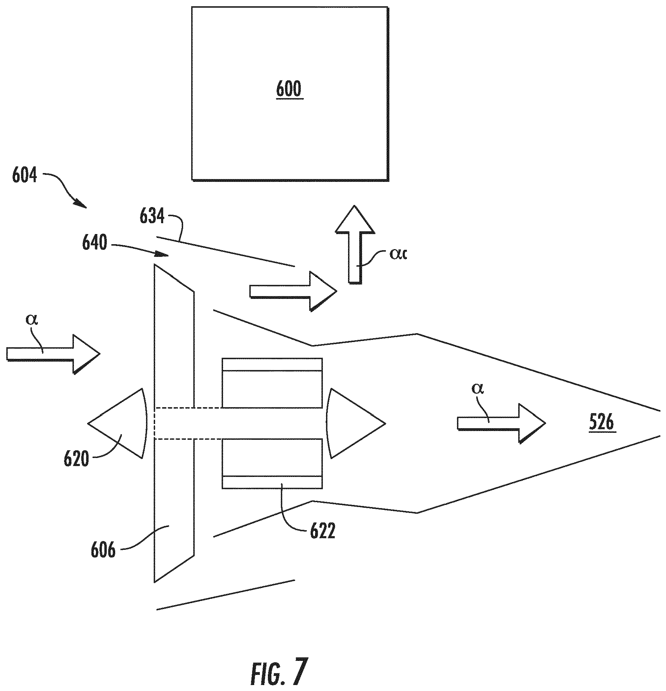

Referring now to FIGS. 6 and 7, simplified schematics of propulsors and fuel cell power systems in accordance with two additional exemplary embodiments of the present disclosure are provided. The exemplary embodiments of FIGS. 6 and 7 may be configured in a similar manner as one or more of the exemplary propulsors described above with reference to FIGS. 1 through 5, and similarly the exemplary fuel cell power systems 500, 600 of FIGS. 6 and 7, respectively, may be configured in a similar manner as one or more of the exemplary fuel cell power systems 300, 400 of respective FIGS. 4 and 5.

Referring particularly to FIG. 6, a propulsor 520 with an engine 504 is shown. Specifically, the propulsor 520 is an electric propulsor operably coupled to an electric motor 522. The engine 504 is simplified to include only a fan 506 and a low-pressure compressor 510. Additionally, a bypass airflow passage 540 is defined with a nacelle 534, the nacelle 534 extending over an outer portion of the engine 504 so as to define the bypass airflow passage 540 therebetween. In the depicted embodiment, air α from the bypass airflow passage 540 may be insufficient on its own to meet the needs of the fuel cell power system 500. Thus, the low-pressure compressor 510 may provide all, or almost all, of a compressed air αc to the fuel cell power system 500.

Referring now to FIG. 7, a propulsor 620 with an engine 604 is shown. Specifically, the propulsor 620 is an electric propulsor and is operably coupled to an electric motor 622. The engine 604 is simplified to include only a fan 606 and a nacelle 634 extending over an outer portion of the engine 604. A bypass airflow passage 640 is defined with the nacelle 634, between the nacelle 634 and the outer portion of the engine 604. Air α generally flows through the bypass airflow passage 640, where it may turn into compressed air αc. Some of the air α may flow through the propulsor 620 and electric motor 622 and exit out a nozzle 626. In the depicted embodiment, the air α from the bypass airflow passage 640 provides sufficient pressure alone. Therefore, compressed air αc from a low-pressure compressor (not shown) is not necessary and the low-pressure compressor can be eliminated.

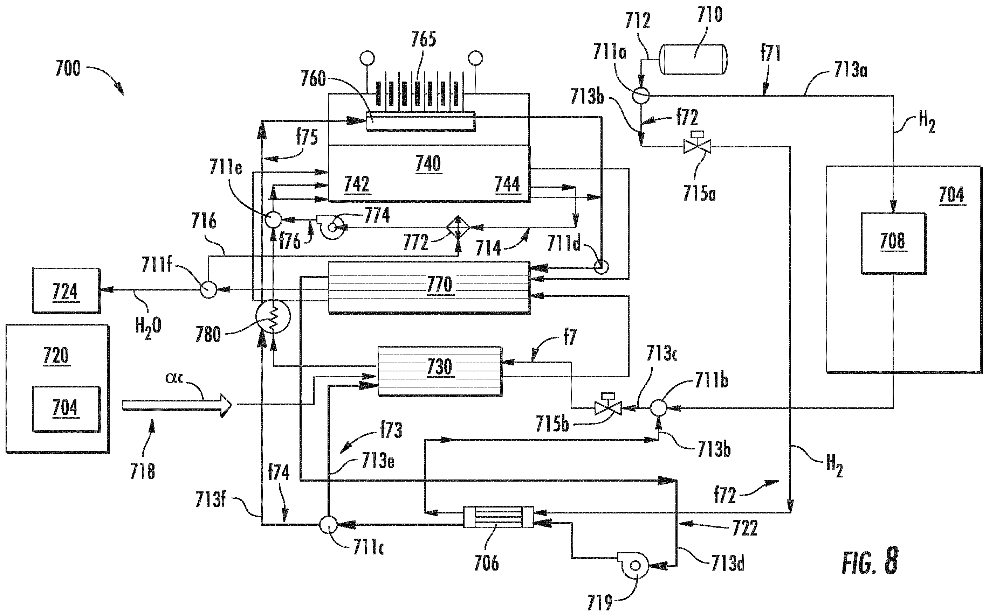

Referring now to FIG. 8, a fuel cell power system 700 in accordance with another exemplary aspect of the present disclosure is provided. The exemplary fuel cell power system 700 of FIG. 8 may be configured in substantially the same manner as the exemplary fuel cell power system 300 of FIG. 4, and accordingly, the same or similar reference numbers may refer to the same or similar parts.

However, for the embodiment of FIG. 8, the fuel cell power system 700 further includes at least one hydrogen/coolant heat exchanger 706 and a coolant pump 719. With such a configuration, the hydrogen fuel is used to cool down the coolant instead of applying direct cooling to the components of the fuel cell power system 700 (e.g., a fuel cell stack 740, a heat exchanger 730, a humidifier 770, and a battery heat exchanger 760). The coolant is then used to cool the temperature of incoming compressed air αc from a propulsor 720 using the heat exchanger 730. Additionally, the hydrogen coolant is used to cool the fuel cell stack 740 and at least part of the battery heat exchanger 760, such as the battery (not shown).

Referring still to FIG. 8, the fuel cell power system 700 may have a fuel delivery system 712, where the fuel delivery system 712 is similar to the fuel delivery system 312 of FIG. 4 and a compressed air αc delivery system 718, where the compressed air αc delivery system 718 is similar to the compressed airflow delivery system 318 of FIG. 4. Hydrogen fuel is provided from a fuel tank 710 to a first juncture 711a. From the first juncture 711a, the hydrogen fuel is split into two flows: a first flow f71 and a second flow f72. The first flow f71 provides hydrogen fuel through a first duct 713a to the one or more engine heat exchangers 708 of an engine 704 and is returned from the one or more engine heat exchangers 708 to a second juncture 711b, where the first flow f71 rejoins the second flow f72.

The second flow f72 provides the hydrogen fuel through a second duct 713b to a first valve 715a and into the hydrogen/coolant heat exchanger 706, before rejoining the first flow f71 at the second juncture 711b. The rejoined flow, e.g., a flow f7, including the first flow f71 and the second flow f72 then provides the hydrogen fuel through a third duct 713c to a second valve 715b and into the heat exchanger 730, where the heated hydrogen fuel is subsequently provided to the fuel cell stack 740 for electric power generation, as described above.

After exiting the fuel cell stack 740 through a stack outlet 744, the flow f7 flows through the humidifier 770. The humidifier 770 humidifies the coolant and circulates it to the coolant pump 719 through a fourth duct 713d as part of a coolant cooling system 722. From the coolant pump 719, the coolant is then provided to the hydrogen/coolant heat exchanger 706, before flowing through a third juncture 711c, where the flow of the coolant is split into a first coolant flow f73 and a second coolant flow f74. The first coolant flow f73 provides the coolant through a fifth duct 713e to the heat exchanger 730 and rejoins the second coolant flow f74 before flowing through the humidifier 770. The second coolant flow f74 provides the coolant through a sixth duct 713f to a startup heater 780, and then to both the battery heat exchanger 760 and the fuel cell stack 740 in a first stream f75 and a second stream f76, respectively. The first stream f75 and the second stream f76 of the second coolant flow f74 then rejoin upstream of the fourth juncture 711d, before rejoining the first coolant flow f73 at the fourth juncture 711d and entering the humidifier 770.

Additionally, the fuel cell power system 700 includes a recirculation system 714 directly downstream of the fuel cell stack 740, where the recirculation system 714 includes a separator 772 and a recirculation pump 774. The recirculation system 714 may further include an exhaust water system 716. The separator 772 separates exhaust water (denoted as H₂O) from the hydrogen fuel and ejects it through an exhaust section 724 as part of the exhaust water system 716.

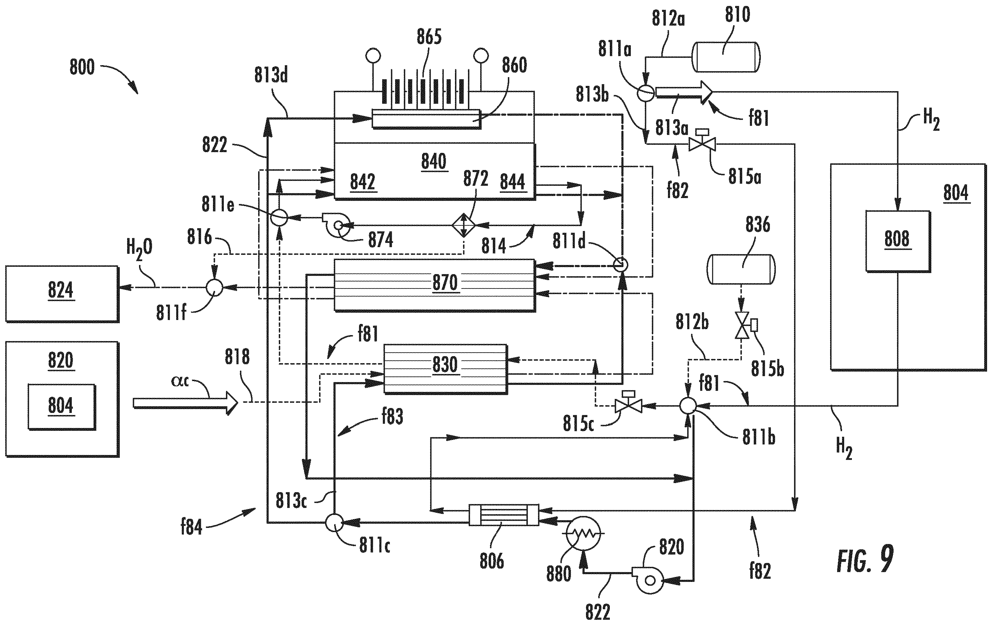

Referring now to FIG. 9, a fuel cell power system 800 in accordance with yet another exemplary aspect of the present disclosure is provided. The exemplary fuel cell power system 800 of FIG. 9 may be configured in substantially the same manner as the exemplary fuel cell power system 700 of FIG. 8, and accordingly, the same or similar reference numbers may refer to the same or similar parts.

However, for the embodiment of FIG. 9, a startup heater 880 is positioned midstream between a hydrogen/coolant heat exchanger 806 and a coolant pump 820. The fuel cell power system 800 may have more than one fuel delivery systems, such as a first fuel delivery system 812a and a second fuel delivery system 812b, where the first fuel delivery system 812a is similar to the fuel delivery system 712 of FIG. 8. Hydrogen fuel is provided from a fuel tank 810 to a first juncture 811a. From the first juncture 811a, the hydrogen fuel is split into two flows: a first flow f81 and a second flow f82. The first flow f81 provides hydrogen fuel through a first duct 813a to one or more engine heat exchangers 808 of an engine 804 and is returned from the one or more engine heat exchangers 808 to a second juncture 811b, where the first flow f81 joins a flow from the second fuel delivery system 812b.

A coolant cooling system 822 provides the coolant from the coolant pump 820 to the startup heater 880. The startup heater 880, along with the hydrogen fuel provided from a first valve 815a through the second duct 813b is flowed into the hydrogen/coolant heat exchanger 806. The coolant then reaches a third juncture 811c, where it splits into two flows: a first coolant flow f83 and a second coolant flow f84. The first coolant flow f83 provides the coolant to a heat exchanger 830 through a third duct 813c before rejoining the second coolant flow f84. The second coolant flow f84 provides coolant through a fourth duct 813d to a battery heat exchanger 860 and through a fifth duct 813e to a fuel cell stack 840 (e.g., in a stack inlet 842 of the fuel cell stack 840 and out a stack outlet 844 of the fuel cell stack 840). The coolant from the battery heat exchanger 860 and to the fuel cell stack 840 is rejoined into the second coolant flow f84, before rejoining the first coolant flow f83 at the fourth juncture 811d. From the fourth juncture 811d, the coolant is provided to a humidifier 870, from which the coolant is then recirculated to the coolant pump 820 as part of the coolant cooling system 822.

Also for the embodiment of FIG. 9, the fuel cell power system 800 further includes a startup hydrogen tank 836, which stores the hydrogen fuel for the second fuel delivery system 812b. The startup hydrogen tank 836 is a high-pressure tank configured for storing gaseous hydrogen fuel used to start the fuel cell power system 800.

The second fuel delivery system 812b provides gaseous hydrogen through a second valve 815b to meet the hydrogen fuel from the first fuel delivery system 612a at the second juncture 811b. At least a portion of the hydrogen fuel is provided from the second juncture 811b to the coolant pump 820 via the coolant cooling system 822. The remaining portion of the hydrogen fuel is provided from the second juncture 811b to a third valve 815c located upstream of the heat exchanger 830. The hydrogen fuel then generally follows the same path as described with reference to fuel delivery system 312 of FIG. 4 as described above.

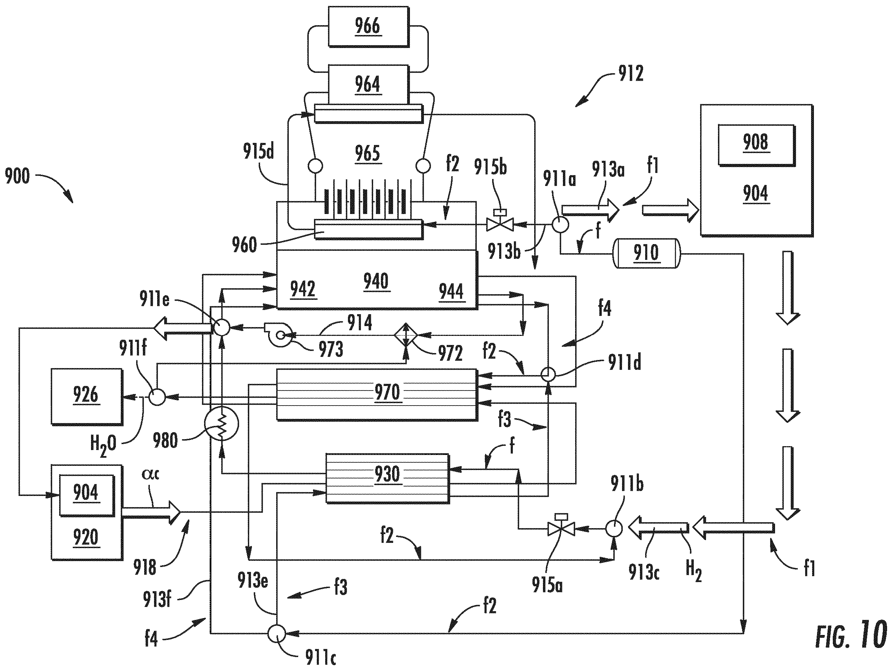

Referring now to FIG. 10, a fuel cell power system 900 in accordance with yet another exemplary aspect of the present disclosure is provided. The exemplary fuel cell power system 900 of FIG. 10 may be configured in substantially the same manner as the exemplary fuel cell power system of any of the figures describe above, and accordingly, the same or similar reference numbers may refer to the same or similar parts (e.g., fuel cell stack 940 in FIG. 10 corresponds to fuel cell stacks 340, 740, and 840 in FIGS. 4, 8, and 9, respectively).

The fuel cell power system 900 includes a power converter 964 and at least one electric machine 966. Similar to the exemplary fuel cell power system 300 of FIG. 4, a fuel delivery system 912 includes one or more ducts 913 to facilitate the flow of hydrogen fuel as described herein. A flow f of hydrogen fuel from a fuel tank 910 is split at a first juncture 911a into a first flow f1 through a first duct 913a and a second flow f2 through a second duct 913b. The first flow f1 through the first duct 913a flows from the fuel tank 910 to one or more engine heat exchangers 908, such as a first oil heat exchanger and a second exhaust heat exchanger, within an engine 904 (as in other figures, the engine 904 is depicted schematically in two places for clarity purposes). This hydrogen fuel returns from the one or more heat engine heat exchangers 908 through a third duct 913c and is rejoined with the second flow f2 at a second juncture 911b with the third duct 913c.

The second flow f2 of hydrogen fuel is provided through a second duct 913b and a second valve 915b to a battery heat exchanger 960. The battery heat exchanger 960 is in thermal communication with a power output assembly 965 for reducing a temperature of the power output assembly 965. The battery heat exchanger 960 is further in fluid communication with the power converter 964, which in turn is in electrical communication with the at least one electric machine 966. The power converter 964 and the at least one electric machine 966, or both, are in thermal communication with the fuel delivery system for transferring heat with the flow of hydrogen fuel through the fuel delivery system. The second flow f2 passes through a fourth duct 915d to the power converter 964, and is then passed to a third juncture 911c, where it splits into a primary flow f3 and a secondary flow f4. In such a manner, the hydrogen fuel may cool the power converter 964 (and although not depicted schematically in FIG. 10, the at least one electric machine 966). The primary flow f3 is provided to a heat exchanger 930 and flows through a fifth duct 913e. The secondary flow f4 is provided through a sixth duct 913f to the fuel cell stack 340 to cool a fuel cell stack 940, through a stack inlet 942, out a stack outlet 944, before rejoining the primary flow f3 at a fourth juncture 911d, from where the second flow f2 (e.g., the combination of the primary flow f3 and the secondary flow f4) flows to a humidifier 970. The second flow f2 then flows out of the humidifier 970 and meets the first flow f1 at a second juncture 911b. From the second juncture 911b, the flow f (e.g., the combination of the first flow f1 and the second flow f2) flows through the heat exchanger 930, to a startup heater 980, and then to a fifth juncture 911e. From the fifth juncture 911e, the flow f is fed into the fuel cell stack 940 and/or to the engine 904 (e.g., a combustor). The portion of the flow f flowing out of the stack outlet 944 of the fuel cell stack 940 undergoes a recirculation cycle, passing through a separator 972 and a recirculation pump 973, before going through the fifth juncture 911e again.

Accordingly, it will be appreciated that for the embodiment of FIG. 10, the liquid hydrogen fuel is used to cool the power converter 964, the at least one electric machine 966, or both, in addition to the components mentioned with respect to other embodiments. The hydrogen fuel may then be directed to the fuel cell stack 940.

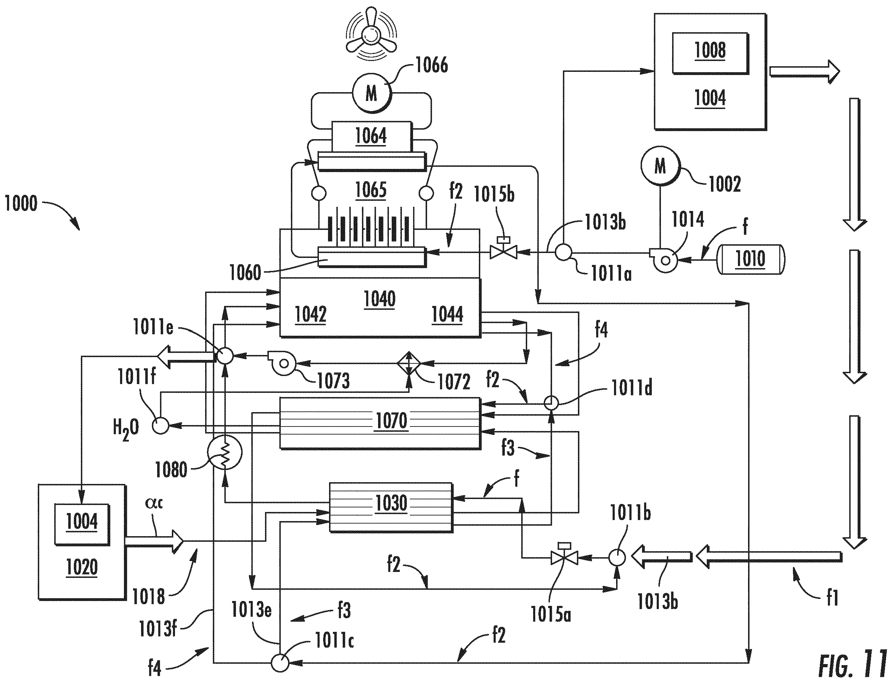

Referring now to FIG. 11, a fuel cell power system 1000 powering a pump motor 1002 is shown. The pump motor 1002 is operably coupled to a liquid hydrogen fuel pump 1014, which is operably coupled with a fuel tank 1010. The fuel cell power system 1000 also includes a power converter 1064 fluidly and/or thermally coupled to a battery heat exchanger 1060 and output power 1065 of the battery heat exchanger 1060. The power converter 1064 is further in electrical communication with the pump motor 1002 and a propulsion motor 1066. Additionally, the same or similar reference numbers may refer to the same or similar parts in earlier figures.

Generally, the fuel cell power system 1000 has a fuel delivery system similar to the fuel delivery system 912 described above with respect to a fuel delivery system 812 of FIG. 10. In the embodiment of FIG. 11, however, a flow f flows from the fuel tank 1010 to the liquid hydrogen fuel pump 1014, which is operably coupled to the pump motor 1002, before flowing to a first juncture 1011a, where a first portion f1 of the flow f goes to one or more engine heat exchangers 1008 in an engine 1004. A second portion f2 of the flow f flows through a second duct 1013b and a second valve 1015b to the battery heat exchanger 1060. From the battery heat exchanger 1060, the hydrogen may flow to the power converter 1064 to a third juncture 1011c.

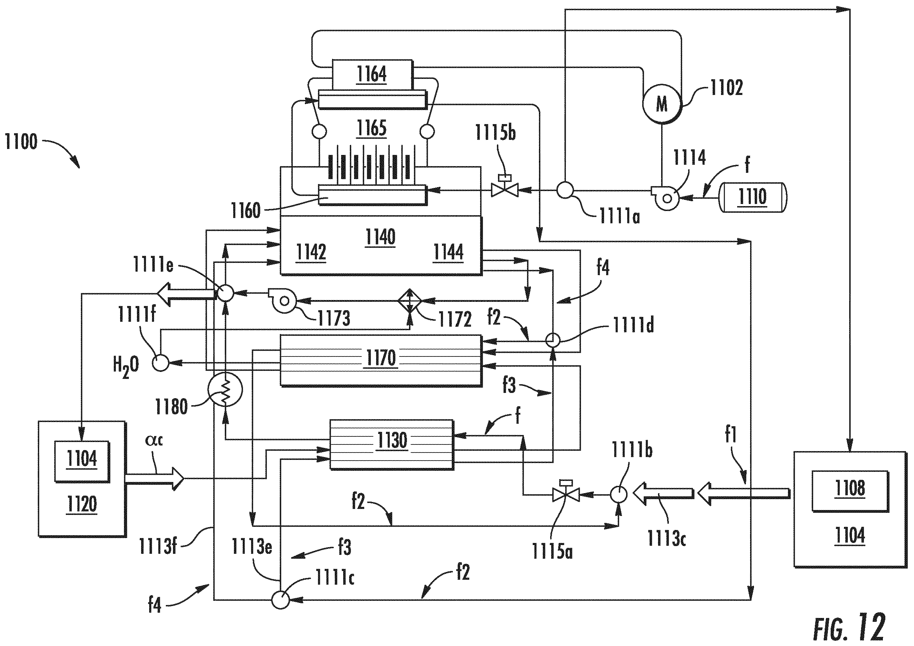

In still other embodiments, e.g., the embodiment of FIG. 12, a fuel cell power system 1100 includes a liquid hydrogen fuel pump 1114 fluidly coupled to a fuel tank 1110 and operably coupled to a pump motor 1102. The pump motor 1102 is in thermal communication with a power converter 1164, and the power converter 1164 is further in thermal communication with an output power 1165 of a battery heat exchanger 1160. In the fuel cell power system 1100, a first flow f flows from the fuel tank 1110 to the liquid hydrogen fuel pump 1114, and then to a first juncture 1111a, where the flow f separates into a first portion f1 and a second portion f2. The first portion f1 goes to one or more engine heat exchangers 1108 within an engine 1104, and the second portion f2 goes to a second valve 1115b, before flowing to the battery heat exchanger 1160. The second portion f2 then flows to the power converter 1164, which converts the hydrogen fuel to power, which powers the pump motor 1102.

The rest of the fuel cell power system 1100 operates in a similar manner to the fuel cell power systems described in other figures; as such, the same or similar reference numbers may refer to the same or similar parts in earlier figures.

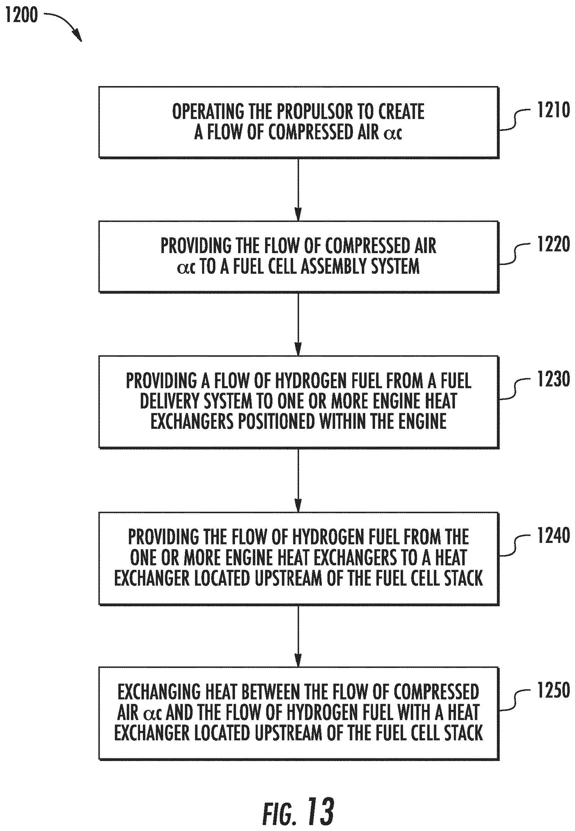

Referring now to FIG. 13, an exemplary method 1200 of operating an aircraft, e.g., the aircraft 10 of FIG. 1, is illustrated as a flow chart. In exemplary embodiments, the aircraft 10 is a hydrogen aircraft. As will be appreciated, the method 1200 may be used with one or more of the exemplary fuel cell power systems of the present disclosure, such as one or more of the exemplary fuel cell power systems 300, 400, 500, 600, 700, 800, 900, 1000, and/or 1100 of FIGS. 4, 5, 6, 7, 8, 9, 10, 11, and/or 12, respectively. Similarly, the method 1200 may be used with one or more of the exemplary propulsors described above with reference to FIGS. 2, 3, 5, 6, 7, or a combination thereof.

As shown, the method 1200 includes, at (1210), operating the propulsor to create a flow of compressed air αc; at (1220), providing the flow of compressed air αc to a fuel cell assembly system; at (1230), providing a flow of hydrogen fuel from a fuel delivery system to one or more engine heat exchangers positioned within the engine; at (1240), providing the flow of hydrogen fuel from the one or more engine heat exchangers to a heat exchanger located upstream of the fuel cell stack; and at (1250), exchanging heat between the flow of compressed air αc and the flow of hydrogen fuel with a heat exchanger located upstream of the fuel cell stack. It will be appreciated that although the method 1200 is described herein with respect to a hydrogen aircraft and with a fuel cell stack, e.g., a proton exchange membrane fuel cell stack, the method 1200 may additionally and/or alternatively operate with any other suitable fuel cell power system for any other suitable vehicle and/or engine.

The method 1200 includes, at (1210), operating the propulsor, such as the exemplary propulsor 320 of FIG. 2, to create a flow of compressed air αc, e.g., in the low-pressure compressor, the bypass airflow passage, or both. As used herein, "operating" refers to all operational conditions for the propulsor capable of generating a compressed airflow, including flight operations, ground idle operations, startups operations, taxi operations, etc.

At (1220), the method 1200 includes providing the flow of compressed air αc to the fuel cell power system. As described above, the flow of compressed air αc may be created by a compressor section (e.g., a low-pressure compressor), a bypass airflow passage, or both.

The method 1200 further includes, at (1230), providing a flow of hydrogen fuel from a fuel delivery system to one or more engine heat exchangers positioned within the engine. The hydrogen fuel is provided from the fuel tank to the engine, where it is heated by the one or more engine heat exchangers of the engine. The hydrogen fuel within the fuel tank is at least partially in a liquid phase, and the fuel cell power system is configured to provide hydrogen fuel from the fuel tank substantially completely in the liquid phase. Moreover, for the exemplary aspect of the method 1200 depicted, it will be appreciated that providing the flow of hydrogen fuel from the fuel delivery system may include metering the flow of hydrogen fuel with a flow metering unit, such as a valve.

Further, as mentioned previously, the flow of hydrogen fuel includes a first flow of hydrogen fuel and a second flow of hydrogen fuel. The method 1200 may additionally include providing the second flow of hydrogen fuel from the fuel delivery system directly to a fuel cell stack of the fuel cell power system.

As mentioned, at (1240), the method 1200 includes providing the flow of hydrogen fuel from the one or more engine heat exchangers to a heat exchanger located upstream of the fuel cell stack. More specifically, as described above in reference to FIG. 4, the flow of hydrogen fuel may be received within the third juncture 311c, passed through the first valve 315a and provided into the heat exchanger 330.

The method 1200 includes, at (1250), exchanging heat between the flow of compressed air and the flow of hydrogen fuel with the heat exchanger located upstream of the fuel cell stack. As the compressed air typically leaves the low-pressure compressor, the bypass airflow passage, or both, extremely hot, the heat exchanger exchanges heat between the hot compressed air and the cold liquid hydrogen fuel. The cooled compressed air is then humidified into humidified compressed air by the humidifier before flowing into the fuel cell stack.

The fuel cell power system operated in accordance with the exemplary method 1200 described herein may allow for utilization of a hydrogen fuel as a fuel source for the engine, and more particularly may allow for storing the hydrogen fuel in a liquid phase, while providing hydrogen fuel in a gaseous phase to the engine for combustion.

In additional embodiments, e.g., as mentioned with respect to the fuel cell power system 300 in FIG. 4, above, the fuel cell power system may include a recirculation system that includes a separator and a recirculation pump, and the method 1200 may include separating exhaust water H₂O and/or exhaust from the hydrogen fuel. The method 1200 may also include ejecting the exhaust water H₂O and exhaust through the exhaust section of the aircraft.

In yet another embodiment, when the aircraft is in startup and/or pre-operation mode, the method 1200 may include using a startup heater to warm the hydrogen fuel before the hydrogen fuel is flowed to the fuel cell stack. In some embodiments, the startup heater may further heat at least a portion of the engine and/or the compressed air αc. Further, the startup heater may be a forced air heater, where the startup heater provides compressed air to the fuel cell stack. As discussed above, the startup heater is used when the aircraft is not yet operating.

In yet other embodiments, e.g., where the fuel cell system is the fuel cell system 800 described with reference to FIG. 9, it will be appreciated that the method 1200 may additionally include providing a third flow of hydrogen fuel from a startup hydrogen tank 836 to, in serial order, a coolant pump 820, a startup heater 880, and a hydrogen/coolant heat exchanger 806. Providing the third flow of hydrogen fuel may in some embodiments occur prior to providing the flow of hydrogen fuel to the heat exchanger.

Further, in embodiments where the fuel cell system further includes a power converter and at least one electric machine, e.g., as shown in FIG. 10, the method 1200 may further include flowing at least a portion of the hydrogen fuel from the fuel tank to the power converter, to the at least one electric machine, or both. In at least certain exemplary aspects, the method 1200 may include cooling the at least one electric machine via thermal communication with the power converter.

In some embodiments, the fuel cell system includes a pump motor operably coupled to a liquid hydrogen fuel pump and a power converter, as described in FIG. 11. With such an exemplary aspect, the method 1200 may include providing the hydrogen fuel in from the fuel tank to the liquid hydrogen fuel pump, before splitting into at least two flows, one of which feeds to one or more engine heat exchangers and at least one of the others flows to the battery heat exchanger to cool the power converter.

In yet other embodiments, the fuel cell power system includes a power converter and a liquid hydrogen fuel pump fluidly coupled to a fuel tank and operably coupled to a pump motor. This fuel cell power system is shown in FIG. 12. The method 1200 may include providing a flow of hydrogen fuel from the fuel tank to the liquid hydrogen fuel pump. A portion of the flow from the liquid hydrogen fuel pump may then be provided to the battery heat exchanger and power converter. The method 1200 may further include converting the hydrogen fuel to electric power via the power converter, where the electric power operates and/or cools the pump motor.

Although specific features of various embodiments may be shown in some drawings and not in others, this is for convenience only. In accordance with the principles of the present disclosure, any feature of a drawing may be referenced and/or claimed in combination with any feature of any other drawing.

This written description uses examples to disclose the preferred embodiments, including the best mode, and also to enable any person skilled in the art to practice the preferred embodiments, including making and using any devices or systems and performing any incorporated methods. The patentable scope of the preferred embodiments is defined by the claims, and may include other examples that occur to those skilled in the art.

## Claims

1. A fuel cell power system (20, 180, 300, 400, 500, 700, 900, 1000, 1100) for a vehicle (302) having a propulsor (205, 320, 420, 520, 620, 720), the propulsor (205, 320, 420, 520, 620, 720) configured to generate thrust for the vehicle (302) and a flow of compressed air, the fuel cell power system (20, 180, 300, 400, 500, 700, 900, 1000, 1100) comprising:
a first fuel delivery system (150, 312, 712, 912) for providing a flow of hydrogen fuel, the first fuel delivery system (150, 312, 712, 912) comprising a fuel tank (22, 148, 310, 410, 710, 810, 910, 1010, 1110) for storing liquid hydrogen fuel;
a fuel cell stack (30, 340, 740, 840, 940) configured to be located remotely from the propulsor (205, 320, 420, 520, 620, 720) and in airflow communication with the propulsor (205, 320, 420, 520, 620, 720) for receiving the flow of compressed air from the propulsor (205, 320, 420, 520, 620, 720), the fuel cell stack (30, 340, 740, 840, 940) further in fluid communication with the first fuel delivery system (150, 312, 712, 912) for receiving the flow of hydrogen fuel from the first fuel delivery system (150, 312, 712, 912);
a hydrogen/coolant heat exchanger (806) in which the hydrogen fuel is used to cool down a coolant used as part of a coolant cooling system (822) to cool components of the fuel cell power system (20, 180, 300, 400, 500, 700, 800, 900, 1000, 1100);
a coolant pump (820) to provide the coolant to the hydrogen/coolant heat exchanger (806); **characterized in that** it further comprises:
a startup hydrogen tank (836), the startup hydrogen tank (836) comprising a high-pressure tank configured for storing gaseous hydrogen fuel used to start the fuel cell power system (800);
a startup heater (880) positioned between the hydrogen/coolant heat exchanger (806) and the coolant pump (820); and
a second fuel delivery system (812b) to provide the gaseous hydrogen to meet the hydrogen fuel from the first fuel delivery system (812a) at a juncture (811b), and
wherein at least a portion of the hydrogen fuel is provided from the juncture (811b) to the coolant pump (820) via the coolant cooling system (822), wherein the at least a portion of the hydrogen serves as the coolant.

2. The fuel cell power system (20, 180, 300, 400, 500, 700, 900, 1000, 1100) of claim 1, further comprising:
a battery heat exchanger (360, 760, 860, 960, 1060, 1160) in thermal communication with the fuel cell stack (30, 340, 740, 840, 940) and in thermal communication with the first fuel delivery system (150, 312, 712, 912) for transferring heat with the flow of hydrogen fuel through the first fuel delivery system (150, 312, 712, 912).

3. The fuel cell power system (20, 180, 300, 400, 500, 700, 900, 1000, 1100) of any preceding claim, wherein the fuel cell power system (20, 180, 300, 400, 500, 700, 900, 1000, 1100) further comprises a humidifier (370, 770, 870, 970) for circulating humidified compressed air to the fuel cell stack (30, 340, 740, 840, 940).

4. The fuel cell power system (20, 180, 300, 400, 500, 700, 900, 1000, 1100) of any preceding claim, further comprising:
a heat exchanger (330, 730, 830, 930) for receiving the flow of compressed air from the propulsor (205, 320, 420, 520, 620, 720), wherein the heat exchanger (330, 730, 830, 930) is located upstream of the fuel cell stack (30, 340, 740, 840, 940) and is in thermal communication with the first fuel delivery system (150, 312, 712, 912) for transferring heat with the flow of hydrogen fuel through the first fuel delivery system (150, 312, 712, 912).

5. The fuel cell power system (20, 180, 300, 400, 500, 700, 900, 1000, 1100) of any preceding claim when installed in a vehicle (302) having a propulsor (205, 320, 420, 520, 620, 720), wherein the propulsor (205, 320, 420, 520, 620, 720) is an electric propulsor (205, 320, 420, 520, 620, 720).

6. The fuel cell power system (20, 180, 300, 400, 500, 700, 900, 1000, 1100) of claim 5, wherein the electric propulsor (205, 320, 420, 520, 620, 720) further comprises:
a low-pressure compressor providing at least a portion of the flow of compressed air, and
an electric motor (206, 522, 622).

7. The fuel cell power system (20, 180, 300, 400, 500, 700, 900, 1000, 1100) of any preceding claim when installed in a vehicle (302) having a propulsor (205, 320, 420, 520, 620, 720), wherein the propulsor (205, 320, 420, 520, 620, 720) is a part of a turbomachine (104, 414) comprising an engine (304, 504, 604, 704, 804, 904, 1004, 1104), wherein a downstream section (138, 438, 538, 638) of a nacelle (134, 434, 534, 634) extends over an outer portion of the engine (304, 504, 604, 704, 804, 904, 1004, 1104) so as to define a bypass airflow passage (140, 440, 540, 640) therebetween, the bypass airflow passage (140, 440, 540, 640) providing at least a portion of the flow of compressed air.

8. The fuel cell power system (20, 180, 300, 400, 500, 700, 900, 1000, 1100) of claim 7, wherein air from the bypass airflow passage (140, 440, 540, 640) comprises all of the flow of compressed air in the flow of compressed air.

9. The fuel cell power system (20, 180, 300, 400, 500, 700, 900, 1000, 1100) of any preceding claim, the fuel cell power system (20, 180, 300, 400, 500, 700, 900, 1000, 1100) further comprising:
a power converter (964, 1064, 1164); and
at least one electric machine (966), wherein the power converter (964, 1064, 1164), the at least one electric machine (966), or both are in thermal communication with the first fuel delivery system (150, 312, 712, 912) for transferring heat with the flow of hydrogen fuel through the first fuel delivery system (150, 312, 712, 912).

10. The fuel cell power system (20, 180, 300, 400, 500, 700, 900, 1000, 1100) of any preceding claim, the fuel cell power system (20, 180, 300, 400, 500, 700, 900, 1000, 1100) further comprising:
a pump motor (1002, 1102).

11. The fuel cell power system (20, 180, 300, 400, 500, 700, 900, 1000, 1100) of claim 10, the fuel cell power system (20, 180, 300, 400, 500, 700, 900, 1000, 1100) further comprising:
a liquid hydrogen fuel pump (1014, 1114) fluidly coupled to the fuel tank (22, 148, 310, 410, 710, 810, 910, 1010, 1110) and operably coupled to a pump motor (1002, 1102); and
a power converter (964, 1064, 1164) in electrical communication with the pump motor (1002, 1102).

12. A method (1200) of powering an aircraft (10), the aircraft (10) comprising a propulsor (205, 320, 420, 520, 620, 720) having an engine (304, 504, 604, 704, 804, 904, 1004, 1104) of the aircraft (10) and a fuel cell power system (20, 180, 300, 400, 500, 700, 900, 1000, 1100) comprising a fuel cell stack (30, 340, 740, 840, 940), the method (1200) comprising:
providing a flow of gaseous hydrogen fuel from a startup hydrogen tank (836) to, in serial order, a coolant pump (719, 820), a startup heater (880), and a hydrogen/coolant heat exchanger (706, 806) , the startup hydrogen tank (836) comprising a high-pressure tank configured for storing the gaseous hydrogen fuel, the gaseous hydrogen fuel used to start the fuel cell power system (20, 180, 300, 400, 500, 700, 800, 900, 1000, 1100), the fuel cell power system comprising a first fuel delivery system (150, 312, 712, 912) for providing a flow of hydrogen fuel, the first fuel delivery system (150, 312, 712, 912) comprising a fuel tank (22, 148, 310, 410, 710, 810, 910, 1010, 1110) for storing liquid hydrogen fuel, the hydrogen/coolant heat exchanger (806) used to cool down a coolant used as part of a coolant cooling system (822) to cool components of the fuel cell power system (20, 180, 300, 400, 500, 700, 800, 900, 1000, 1100), the coolant pump (820) to provide the coolant to the hydrogen/coolant heat exchanger (806), the startup heater (880) positioned between the hydrogen/coolant heat exchanger (806) and the coolant pump (820), the gaseous hydrogen provided via a second fuel delivery system (812b) to meet the hydrogen fuel from the first fuel delivery system (812a) at a juncture (811b), and
wherein at least a portion of the hydrogen fuel is provided from the juncture (811b) to the coolant pump (820) via the coolant cooling system (822), wherein the at least a portion of the hydrogen serves as the coolant;
operating the propulsor (205, 320, 420, 520, 620, 720) to create a flow of compressed air;
providing the flow of compressed air to the fuel cell power system (20, 180, 300, 400, 500, 700, 900, 1000, 1100);
providing a flow of liquid hydrogen fuel from a fuel delivery system (150, 312, 712, 912) to one or more engine (304, 504, 604, 704, 804, 904, 1004, 1104) heat exchangers (330, 730, 830, 930) positioned within the engine (304, 504, 604, 704, 804, 904, 1004, 1104);
providing the flow of hydrogen fuel from the one or more engine (304, 504, 604, 704, 804, 904, 1004, 1104) heat exchangers (330, 730, 830, 930) to a heat exchanger (330, 730, 830, 930) located upstream of the fuel cell stack (30, 340, 740, 840, 940); and
exchanging heat between the flow of compressed air and the flow of hydrogen fuel with the heat exchanger (330, 730, 830, 930).

13. The method (1200) of claim 12, wherein the flow of compressed air is created in a bypass airflow passage (140, 440, 540, 640), a low-pressure compressor, or both.

14. The method (1200) of claim 12, wherein providing the flow of gaseous hydrogen fuel occurs prior to providing the flow of hydrogen fuel to the heat exchanger (330, 730, 830, 930).

## Patentansprüche

1. Brennstoffzellen-Stromversorgungssystem (20, 180, 300, 400, 500, 700, 900, 1000, 1100) für ein Fahrzeug (302) mit einer Antriebsvorrichtung (205, 320, 420, 520, 620, 720), wobei die Antriebsvorrichtung (205, 320, 420, 520, 620, 720) konfiguriert ist, um Schub für das Fahrzeug (302) und einen Druckluftstrom zu erzeugen, wobei das Brennstoffzellen-Stromversorgungssystem (20, 180, 300, 400, 500, 700, 900, 1000, 1100) Folgendes umfasst:
ein erstes Brennstoffzufuhrsystem (150, 312, 712, 912) zum Bereitstellen eines Wasserstoff-Brennstoffstroms, wobei das erste Brennstoffzufuhrsystem (150, 312, 712, 912) einen Brennstofftank (22, 148, 310, 410, 710, 810, 910, 1010, 1110) zum Speichern von flüssigem Wasserstoffbrennstoff umfasst;
einen Brennstoffzellenstapel (30, 340, 740, 840, 940), der konfiguriert ist, um sich entfernt von der Antriebsvorrichtung (205, 320, 420, 520, 620, 720) zu befinden und in Luftstromkommunikation mit der Antriebsvorrichtung (205, 320, 420, 520, 620, 720) zu stehen, um den Druckluftstrom von der Antriebsvorrichtung (205, 320, 420, 520, 620, 720) aufzunehmen, wobei der Brennstoffzellenstapel (30, 340, 740, 840, 940) ferner in Fluidkommunikation mit dem ersten Brennstoffzufuhrsystem (150, 312, 712, 912) zum Aufnehmen des Wasserstoff-Brennstoffstroms von dem ersten Brennstoffzufuhrsystem (150, 312, 712, 912) steht;
einen Wasserstoff/Kühlmittel-Wärmetauscher (806), in dem der Wasserstoffbrennstoff zum Abkühlen eines Kühlmittels verwendet wird, das als Teil eines Kühlmittelkühlsystems (822) zum Kühlen von Komponenten des Brennstoffzellen-Stromversorgungssystems (20, 180, 300, 400, 500, 700, 800, 900, 1000, 1100) verwendet wird;
eine Kühlmittelpumpe (820) zum Bereitstellen des Kühlmittels für den Wasserstoff/Kühlmittel-Wärmetauscher (806);
**dadurch gekennzeichnet, dass** es ferner Folgendes umfasst:
einen Startwasserstofftank (836), wobei der Startwasserstofftank (836) einen Hochdrucktank umfasst, der zum Speichern von gasförmigem Wasserstoffbrennstoff konfiguriert ist, der zum Starten des Brennstoffzellen-Stromversorgungssystems (800) verwendet wird;
eine Startheizung (880), die zwischen dem Wasserstoff/Kühlmittel-Wärmetauscher (806) und der Kühlmittelpumpe (820) positioniert ist; und
ein zweites Brennstoffzufuhrsystem (812b) zum Bereitstellen des gasförmigen Wasserstoffs, damit er an einer Verbindungsstelle (811b) auf den Wasserstoffbrennstoff aus dem ersten Brennstoffzufuhrsystem (812a) trifft, und
wobei mindestens ein Anteil des Wasserstoffbrennstoffs von der Verbindungsstelle (811b) für die Kühlmittelpumpe (820) über das Kühlmittelkühlsystem (822) bereitgestellt wird, wobei der mindestens eine Anteil des Wasserstoffs als das Kühlmittel dient.

2. Brennstoffzellen-Stromversorgungssystem (20, 180, 300, 400, 500, 700, 900, 1000, 1100) nach Anspruch 1, ferner Folgendes umfassend:
einen Batteriewärmetauscher (360, 760, 860, 960, 1060, 1160) in thermischer Kommunikation mit dem Brennstoffzellenstapel (30, 340, 740, 840, 940) und in thermischer Kommunikation mit dem ersten Brennstoffzufuhrsystem (150, 312, 712, 912) zum Übertragen von Wärme mit dem Wasserstoff-Brennstoffstrom durch das erste Brennstoffzufuhrsystem (150, 312, 712, 912).

3. Brennstoffzellen-Stromversorgungssystem (20, 180, 300, 400, 500, 700, 900, 1000, 1100) nach einem der vorhergehenden Ansprüche, wobei das Brennstoffzellen-Stromversorgungssystem (20, 180, 300, 400, 500, 700, 900, 1000, 1100) ferner einen Befeuchter (370, 770, 870, 970) zum Zirkulieren befeuchteter Druckluft zu dem Brennstoffzellenstapel (30, 340, 740, 840, 940) umfasst.

4. Brennstoffzellen-Stromversorgungssystem (20, 180, 300, 400, 500, 700, 900, 1000, 1100) nach einem der vorhergehenden Ansprüche, ferner Folgendes umfassend:
einen Wärmetauscher (330, 730, 830, 930) zum Aufnehmen des Druckluftstroms von der Antriebsvorrichtung (205, 320, 420, 520, 620, 720), wobei sich der Wärmetauscher (330, 730, 830, 930) stromaufwärts des Brennstoffzellenstapels (30, 340, 740, 840, 940) befindet und mit dem ersten Brennstoffzufuhrsystem (150, 312, 712, 912) in thermischer Kommunikation steht, um Wärme mit dem Wasserstoff-Brennstoffstrom durch das erste Brennstoffzufuhrsystem (150, 312, 712, 912) zu übertragen.

5. Brennstoffzellen-Stromversorgungssystem (20, 180, 300, 400, 500, 700, 900, 1000, 1100) nach einem der vorhergehenden Ansprüche, das in ein Fahrzeug (302) eingebaut ist, das eine Antriebsvorrichtung (205, 320, 420, 520, 620, 720) aufweist, wobei die Antriebsvorrichtung (205, 320, 420, 520, 620, 720) eine elektrische Antriebsvorrichtung (205, 320, 420, 520, 620, 720) ist.

6. Brennstoffzellen-Stromversorgungssystem (20, 180, 300, 400, 500, 700, 900, 1000, 1100) nach Anspruch 5, wobei die elektrische Antriebsvorrichtung (205, 320, 420, 520, 620, 720) ferner Folgendes umfasst:
einen Niederdruckkompressor, der mindestens einen Anteil des Druckluftstroms bereitstellt, und
einen Elektromotor (206, 522, 622).

7. Brennstoffzellen-Stromversorgungssystem (20, 180, 300, 400, 500, 700, 900, 1000, 1100) nach einem der vorhergehenden Ansprüche, das in ein Fahrzeug (302) eingebaut ist, das eine Antriebsvorrichtung (205, 320, 420, 520, 620, 720) aufweist, wobei die Antriebsvorrichtung (205, 320, 420, 520, 620, 720) Teil einer Turbomaschine (104, 414) ist, die ein Triebwerk (304, 504, 604, 704, 804, 904, 1004, 1104) umfasst, wobei sich ein stromabwärtiger Abschnitt (138, 438, 538, 638) einer Gondel (134, 434, 534, 634) über einen äußeren Anteil des Triebwerks (304, 504, 604, 704, 804, 904, 1004, 1104) erstreckt, um dazwischen einen Bypass-Luftstromkanal (140, 440, 540, 640) zu definieren, wobei der Bypass-Luftstromkanal (140, 440, 540, 640) mindestens einen Anteil des Druckluftstroms bereitstellt.

8. Brennstoffzellen-Stromversorgungssystem (20, 180, 300, 400, 500, 700, 900, 1000, 1100) nach Anspruch 7, wobei Luft aus dem Bypass-Luftstromkanal (140, 440, 540, 640) den gesamten Druckluftstrom in dem Druckluftstrom umfasst.

9. Brennstoffzellen-Stromversorgungssystem (20, 180, 300, 400, 500, 700, 900, 1000, 1100) nach einem der vorhergehenden Ansprüche, wobei das Brennstoffzellen-Stromversorgungssystem (20, 180, 300, 400, 500, 700, 900, 1000, 1100) ferner Folgendes umfasst:
einen Leistungswandler (964, 1064, 1164); und
mindestens eine elektrische Maschine (966), wobei der Leistungswandler (964, 1064, 1164), die mindestens eine elektrische Maschine (966) oder beide in thermischer Kommunikation mit dem ersten Brennstoffzufuhrsystem (150, 312, 712, 912) stehen, um Wärme mit dem Wasserstoff-Brennstoffstrom durch das erste Brennstoffzufuhrsystem (150, 312, 712, 912) zu übertragen.

10. Brennstoffzellen-Stromversorgungssystem (20, 180, 300, 400, 500, 700, 900, 1000, 1100) nach einem der vorhergehenden Ansprüche, wobei das Brennstoffzellen-Stromversorgungssystem (20, 180, 300, 400, 500, 700, 900, 1000, 1100) ferner Folgendes umfasst:
einen Pumpenmotor (1002, 1102).

11. Brennstoffzellen-Stromversorgungssystem (20, 180, 300, 400, 500, 700, 900, 1000, 1100) nach Anspruch 10, wobei das Brennstoffzellen-Stromversorgungssystem (20, 180, 300, 400, 500, 700, 900, 1000, 1100) ferner Folgendes umfasst:
eine Pumpe (1014, 1114) für flüssigen Wasserstoffbrennstoff, die fluidisch mit dem Brennstofftank (22, 148, 310, 410, 710, 810, 910, 1010, 1110) gekoppelt ist und betriebsmäßig mit einem Pumpenmotor (1002, 1102) gekoppelt ist; und
einen Leistungswandler (964, 1064, 1164) in elektrischer Kommunikation mit dem Pumpenmotor (1002, 1102).

12. Verfahren (1200) zum Versorgen eines Luftfahrzeugs (10) mit Strom, das Luftfahrzeug (10) umfassend eine Antriebsvorrichtung (205, 320, 420, 520, 620, 720), die ein Triebwerk (304, 504, 604, 704, 804, 904, 1004, 1104) des Luftfahrzeugs (10) aufweist, und ein Brennstoffzellen-Stromversorgungssystem (20, 180, 300, 400, 500, 700, 900, 1000, 1100), das einen Brennstoffzellenstapel (30, 340, 740, 840, 940) umfasst, wobei das Verfahren (1200) Folgendes umfasst:
Bereitstellen eines Stroms von gasförmigem Wasserstoffbrennstoff von einem Startwasserstofftank (836) nacheinander für eine Kühlmittelpumpe (719, 820), eine Startheizung (880) und einen Wasserstoff/Kühlmittel-Wärmetauscher (706, 806), wobei der Startwasserstofftank (836) einen Hochdrucktank umfasst, der zum Speichern des gasförmigen Wasserstoffbrennstoffs konfiguriert ist, wobei der gasförmige Wasserstoffbrennstoff zum Starten des Brennstoffzellen-Stromversorgungssystems (20, 180, 300, 400, 500, 700, 800, 900, 1000, 1100) verwendet wird, wobei das Brennstoffzellen-Stromversorgungssystem ein erstes Brennstoffzufuhrsystem (150, 312, 712, 912) zum Bereitstellen eines Wasserstoff-Brennstoffstroms umfasst, wobei das erste Brennstoffzufuhrsystem (150, 312, 712, 912) einen Brennstofftank (22, 148, 310, 410, 710, 810, 910, 1010, 1110) zum Speichern von flüssigem Wasserstoffbrennstoff umfasst, wobei der Wasserstoff/Kühlmittel-Wärmetauscher (806) zum Abkühlen eines Kühlmittels verwendet wird, das als Teil eines Kühlmittelkühlsystems (822) zum Kühlen von Komponenten des Brennstoffzellen-Stromversorgungssystems (20, 180, 300, 400, 500, 700, 800, 900, 1000, 1100) verwendet wird, wobei die Kühlmittelpumpe (820) Kühlmittel für den Wasserstoff/Kühlmittel-Wärmetauscher (806) bereitstellt, wobei die Startheizung (880) zwischen dem Wasserstoff/Kühlmittel-Wärmetauscher (806) und der Kühlmittelpumpe (820) positioniert ist, wobei der gasförmige Wasserstoff über ein zweites Brennstoffzufuhrsystem (812b) bereitgestellt wird, damit er an einer Verbindungsstelle (811b) auf den Wasserstoffbrennstoff aus dem ersten Brennstoffzufuhrsystem (812a) trifft, und wobei mindestens ein Anteil des Wasserstoffbrennstoffs von der Verbindungsstelle (811b) für die Kühlmittelpumpe (820) über das Kühlmittelkühlsystem (822) bereitgestellt wird, wobei der mindestens eine Anteil des Wasserstoffs als das Kühlmittel dient;
Betreiben der Antriebsvorrichtung (205, 320, 420, 520, 620, 720), um einen Druckluftstrom zu erzeugen;
Bereitstellen des Druckluftstroms für das Brennstoffzellen-Stromversorgungssystem (20, 180, 300, 400, 500, 700, 900, 1000, 1100);
Bereitstellen eines Stroms von flüssigem Wasserstoffbrennstoff von einem Brennstoffzufuhrsystem (150, 312, 712, 912) für einen oder mehrere Wärmetauscher (330, 730, 830, 930) des Triebwerks (304, 504, 604, 704, 804, 904, 1004, 1104), die in dem Triebwerk (304, 504, 604, 704, 804, 904, 1004, 1104) positioniert sind;
Bereitstellen des Wasserstoff-Brennstoffstroms von dem einen oder den mehreren Wärmetauschern (330, 730, 830, 930) des Triebwerks (304, 504, 604, 704, 804, 904, 1004, 1104) für einen sich stromaufwärts des Brennstoffzellenstapels (30, 340, 740, 840, 940) befindenden Wärmetauscher (330, 730, 830, 930); und
Austauschen von Wärme zwischen dem Druckluftstrom und dem Wasserstoff-Brennstoffstrom mit dem Wärmetauscher (330, 730, 830, 930).

13. Verfahren (1200) nach Anspruch 12, wobei der Druckluftstrom in einem Bypass-Luftstromkanal (140, 440, 540, 640), einem Niederdruckkompressor oder beiden erzeugt wird.

14. Verfahren (1200) nach Anspruch 12, wobei das Bereitstellen des Stroms von gasförmigem Wasserstoffbrennstoff vor dem Bereitstellen des Stroms von Wasserstoffbrennstoff an den Wärmetauscher (330, 730, 830, 930) erfolgt.

## Revendications

1. Système électrique à pile à combustible (20, 180, 300, 400, 500, 700, 900, 1000, 1100) destiné à un véhicule (302) comportant un propulseur (205, 320, 420, 520, 620, 720), le propulseur (205, 320, 420, 520, 620, 720) étant configuré pour générer une poussée pour le véhicule (302) et un écoulement d'air comprimé, le système électrique à pile à combustible (20, 180, 300, 400, 500, 700, 900, 1000, 1100) comprenant :
un premier système d'alimentation en combustible (150, 312, 712, 912) destiné à fournir un écoulement de combustible hydrogène, le premier système d'alimentation en combustible (150, 312, 712, 912) comprenant un réservoir de combustible (22, 148, 310, 410, 710, 810, 910, 1010, 1110) destiné à stocker du combustible hydrogène liquide ;
un empilement de piles à combustible (30, 340, 740, 840, 940) configuré pour être situé à distance du propulseur (205, 320, 420, 520, 620, 720) et en communication aéraulique avec le propulseur (205, 320, 420, 520, 620, 720) afin de recevoir l'écoulement d'air comprimé provenant du propulseur (205, 320, 420, 520, 620, 720), l'empilement de piles à combustible (30, 340, 740, 840, 940) étant en outre en communication fluidique avec le premier système d'alimentation en combustible (150, 312, 712, 912) afin de recevoir l'écoulement de combustible hydrogène provenant du premier système d'alimentation en combustible (150, 312, 712, 912) ;
un échangeur de chaleur hydrogène/liquide de refroidissement (806), dans lequel le combustible hydrogène est utilisé pour refroidir un liquide de refroidissement utilisé dans le cadre d'un système de refroidissement par liquide de refroidissement (822) afin de refroidir des composants du système électrique à pile à combustible (20, 180, 300, 400, 500, 700, 800, 900, 1000, 1100) ;
une pompe à liquide de refroidissement (820) destinée à fournir le liquide de refroidissement à l'échangeur de chaleur hydrogène/liquide de refroidissement (806) ; **caractérisé en ce qu'**il comprend en outre :
un réservoir d'hydrogène de démarrage (836), le réservoir d'hydrogène de démarrage (836) comprenant un réservoir haute pression configuré pour stocker du combustible hydrogène gazeux utilisé pour démarrer le système électrique à pile à combustible (800) ;
un dispositif de chauffage de démarrage (880) positionné entre l'échangeur de chaleur hydrogène/liquide de refroidissement (806) et la pompe à liquide de refroidissement (820) ; et
un deuxième système d'alimentation en combustible (812b) destiné à fournir l'hydrogène gazeux de manière à ce qu'il rejoigne le combustible hydrogène provenant du premier système d'alimentation en combustible (812a) au niveau d'une jonction (811b), et
dans lequel au moins une partie du combustible hydrogène est fournie depuis la jonction (811b) à la pompe à liquide de refroidissement (820) par l'intermédiaire du système de refroidissement par liquide de refroidissement (822), l'au moins une partie de l'hydrogène servant de liquide de refroidissement.

2. Système électrique à pile à combustible (20, 180, 300, 400, 500, 700, 900, 1000, 1100) selon la revendication 1, comprenant en outre :
un échangeur de chaleur de batterie (360, 760, 860, 960, 1060, 1160) en communication thermique avec l'empilement de piles à combustible (30, 340, 740, 840, 940) et en communication thermique avec le premier système d'alimentation en combustible (150, 312, 712, 912) afin de transférer de la chaleur avec l'écoulement de combustible hydrogène à travers le premier système d'alimentation en combustible (150, 312, 712, 912).

3. Système électrique à pile à combustible (20, 180, 300, 400, 500, 700, 900, 1000, 1100) selon l'une quelconque des revendications précédentes, dans lequel le système électrique à pile à combustible (20, 180, 300, 400, 500, 700, 900, 1000, 1100) comprend en outre un humidificateur (370, 770, 870, 970) destiné à faire circuler de l'air comprimé humidifié vers l'empilement de piles à combustible (30, 340, 740, 840, 940).

4. Système électrique à pile à combustible (20, 180, 300, 400, 500, 700, 900, 1000, 1100) selon l'une quelconque des revendications précédentes, comprenant en outre :
un échangeur de chaleur (330, 730, 830, 930) destiné à recevoir l'écoulement d'air comprimé provenant du propulseur (205, 320, 420, 520, 620, 720), dans lequel l'échangeur de chaleur (330, 730, 830, 930) est situé en amont de l'empilement de piles à combustible (30, 340, 740, 840, 940) et est en communication thermique avec le premier système d'alimentation en combustible (150, 312, 712, 912) afin de transférer de la chaleur avec l'écoulement de combustible hydrogène à travers le premier système d'alimentation en combustible (150, 312, 712, 912).

5. Système électrique à pile à combustible (20, 180, 300, 400, 500, 700, 900, 1000, 1100) selon l'une quelconque des revendications précédentes, lorsqu'il est installé dans un véhicule (302) comportant un propulseur (205, 320, 420, 520, 620, 720), dans lequel le propulseur (205, 320, 420, 520, 620, 720) est un propulseur électrique (205, 320, 420, 520, 620, 720).

6. Système électrique à pile à combustible (20, 180, 300, 400, 500, 700, 900, 1000, 1100) selon la revendication 5, dans lequel le propulseur électrique (205, 320, 420, 520, 620, 720) comprend en outre :
un compresseur basse pression fournissant au moins une partie de l'écoulement d'air comprimé, et
un moteur électrique (206, 522, 622).

7. Système électrique à pile à combustible (20, 180, 300, 400, 500, 700, 900, 1000, 1100) selon l'une quelconque des revendications précédentes, lorsqu'il est installé dans un véhicule (302) comportant un propulseur (205, 320, 420, 520, 620, 720), dans lequel le propulseur (205, 320, 420, 520, 620, 720) fait partie d'une turbomachine (104, 414) comprenant un moteur (304, 504, 604, 704, 804, 904, 1004, 1104), dans lequel une section aval (138, 438, 538, 638) d'une nacelle (134, 434, 534, 634) s'étend sur une partie extérieure du moteur (304, 504, 604, 704, 804, 904, 1004, 1104) de manière à définir entre eux un passage d'écoulement d'air de dérivation (140, 440, 540, 640), le passage d'écoulement d'air de dérivation (140, 440, 540, 640) fournissant au moins une partie de l'écoulement d'air comprimé.

8. Système électrique à pile à combustible (20, 180, 300, 400, 500, 700, 900, 1000, 1100) selon la revendication 7, dans lequel l'air provenant du passage d'écoulement d'air de dérivation (140, 440, 540, 640) comprend la totalité de l'écoulement d'air comprimé dans l'écoulement d'air comprimé.

9. Système électrique à pile à combustible (20, 180, 300, 400, 500, 700, 900, 1000, 1100) selon l'une quelconque des revendications précédentes, le système électrique à pile à combustible (20, 180, 300, 400, 500, 700, 900, 1000, 1100) comprenant en outre :
un convertisseur de puissance (964, 1064, 1164) ; et
au moins une machine électrique (966), dans lequel le convertisseur de puissance (964, 1064, 1164), l'au moins une machine électrique (966), ou les deux, sont en communication thermique avec le premier système d'alimentation en combustible (150, 312, 712, 912) afin de transférer de la chaleur avec l'écoulement de combustible hydrogène à travers le premier système d'alimentation en combustible (150, 312, 712, 912).

10. Système électrique à pile à combustible (20, 180, 300, 400, 500, 700, 900, 1000, 1100) selon l'une quelconque des revendications précédentes, le système électrique à pile à combustible (20, 180, 300, 400, 500, 700, 900, 1000, 1100) comprenant en outre :
un moteur de pompe (1002, 1102).

11. Système électrique à pile à combustible (20, 180, 300, 400, 500, 700, 900, 1000, 1100) selon la revendication 10, le système électrique à pile à combustible (20, 180, 300, 400, 500, 700, 900, 1000, 1100) comprenant en outre :
une pompe à combustible hydrogène liquide (1014, 1114) couplée fluidiquement au réservoir de combustible (22, 148, 310, 410, 710, 810, 910, 1010, 1110) et couplée fonctionnellement à un moteur de pompe (1002, 1102) ; et
un convertisseur de puissance (964, 1064, 1164) en communication électrique avec le moteur de pompe (1002, 1102).

12. Procédé (1200) d'alimentation d'un aéronef (10), l'aéronef (10) comprenant un propulseur (205, 320, 420, 520, 620, 720) comportant un moteur (304, 504, 604, 704, 804, 904, 1004, 1104) de l'aéronef (10) et un système électrique à pile à combustible (20, 180, 300, 400, 500, 700, 900, 1000, 1100) comprenant un empilement de piles à combustible (30, 340, 740, 840, 940), le procédé (1200) comprenant :
la fourniture d'un écoulement de combustible hydrogène gazeux depuis un réservoir d'hydrogène de démarrage (836), successivement, à une pompe à liquide de refroidissement (719, 820), à un dispositif de chauffage de démarrage (880) et à un échangeur de chaleur hydrogène/liquide de refroidissement (706, 806), le réservoir d'hydrogène de démarrage (836) comprenant un réservoir haute pression configuré pour stocker le combustible hydrogène gazeux, le combustible hydrogène gazeux étant utilisé pour démarrer le système électrique à pile à combustible (20, 180, 300, 400, 500, 700, 800, 900, 1000, 1100), le système électrique à pile à combustible comprenant un premier système d'alimentation en combustible (150, 312, 712, 912) destiné à fournir un écoulement de combustible hydrogène, le premier système d'alimentation en combustible (150, 312, 712, 912) comprenant un réservoir de combustible (22, 148, 310, 410, 710, 810, 910, 1010, 1110) destiné à stocker du combustible hydrogène liquide, l'échangeur de chaleur hydrogène/liquide de refroidissement (806) étant utilisé pour refroidir un liquide de refroidissement utilisé dans le cadre d'un système de refroidissement par liquide de refroidissement (822) afin de refroidir des composants du système électrique à pile à combustible (20, 180, 300, 400, 500, 700, 800, 900, 1000, 1100), la pompe à liquide de refroidissement (820) étant destinée à fournir le liquide de refroidissement à l'échangeur de chaleur hydrogène/liquide de refroidissement (806), le dispositif de chauffage de démarrage (880) étant positionné entre l'échangeur de chaleur hydrogène/liquide de refroidissement (806) et la pompe à liquide de refroidissement (820), l'hydrogène gazeux étant fourni par l'intermédiaire d'un deuxième système d'alimentation en combustible (812b) de manière à ce qu'il rejoigne le combustible hydrogène provenant du premier système d'alimentation en combustible (812a) au niveau d'une jonction (811b), et dans lequel au moins une partie du combustible hydrogène est fournie depuis la jonction (811b) à la pompe à liquide de refroidissement (820) par l'intermédiaire du système de refroidissement par liquide de refroidissement (822), dans lequel l'au moins une partie de l'hydrogène sert de liquide de refroidissement ;
l'actionnement du propulseur (205, 320, 420, 520, 620, 720) afin de créer un écoulement d'air comprimé ;
la fourniture de l'écoulement d'air comprimé au système électrique à pile à combustible (20, 180, 300, 400, 500, 700, 900, 1000, 1100) ;
la fourniture d'un écoulement de combustible hydrogène liquide depuis un système d'alimentation en combustible (150, 312, 712, 912) à un ou plusieurs échangeurs de chaleur (330, 730, 830, 930) de moteur (304, 504, 604, 704, 804, 904, 1004, 1104) positionnés à l'intérieur du moteur (304, 504, 604, 704, 804, 904, 1004, 1104) ;
la fourniture de l'écoulement de combustible hydrogène depuis les un ou plusieurs échangeurs de chaleur (330, 730, 830, 930) de moteur (304, 504, 604, 704, 804, 904, 1004, 1104) à un échangeur de chaleur (330, 730, 830, 930) situé en amont de l'empilement de piles à combustible (30, 340, 740, 840, 940) ; et
l'échange de chaleur entre l'écoulement d'air comprimé et l'écoulement de combustible hydrogène avec l'échangeur de chaleur (330, 730, 830, 930).

13. Procédé (1200) selon la revendication 12, dans lequel l'écoulement d'air comprimé est créé dans un passage d'écoulement d'air de dérivation (140, 440, 540, 640), un compresseur basse pression, ou les deux.

14. Procédé (1200) selon la revendication 12, dans lequel la fourniture de l'écoulement de combustible hydrogène gazeux a lieu avant la fourniture de l'écoulement de combustible hydrogène à l'échangeur de chaleur (330, 730, 830, 930).
